# EUROPEAN PATENT APPLICATION

(11) **EP 3 819 127 A1**
(43) Date of publication of application: **12.05.2021**
(21) Application number: 20204471.5
(22) Date of filing: 28.10.2020
(51) Int. Cl.: B41M 5/50, B41M 5/52, B41M 5/28, B41M 7/00, B41M 3/18

(54) **PRINTED MATTER PRODUCING METHOD, PRINTING APPARATUS, AND PRINTED MATTER**

(30) Priority: 11.11.2019 JP 2019203686; 02.09.2020 JP 2020147289
(71) Applicant: Ricoh Company, Ltd., Tokyo 143-8555 (JP)
(72) Inventor: USUI, Yuuma, Tokyo, 143-8555 (JP); FUJIWARA, Yukio, Tokyo, 143-8555 (JP); TAKADA, Mikiko, Tokyo, 143-8555 (JP)
(74) Representative: Kato, Yumiko

(57) **Abstract**

Provided is printed matter producing method including: forming a foamable layer containing a foaming agent; applying a defoaming agent to a predetermined region of the foamable layer to bring the defoaming agent into contact with the foamable layer; forming an ink receiving layer over the foamable layer to which the defoaming agent is applied; acquiring image data and shape data representing a shape of a bossed-recessed region of the foamable layer after foamed, and generating print data assigning a greater amount of an ink to a portion in the image data corresponding to an inclined portion of the bossed-recessed region based on the shape data; applying an ink over the ink receiving layer based on the print data to form an image; and applying energy to the foamable layer to form bosses and recesses.

## Description

### BACKGROUND OF THE INVENTION

### Field of the Invention

The present disclosure relates to a printed matter producing method, a printing apparatus, and a printed matter.

### Description of the Related Art

Members such as flooring and wallpaper to which desired images are printed and designs are imparted by, for example, embossing are used on, for example, floors, inner walls, and ceilings of buildings. Further, attempts are being made to improve durability of flooring and wallpaper by applying coatings of ultraviolet (UV) curable materials and coatings of electron beam-curable materials.

In recent years, techniques for inkjet-printing desired images over, for example, embossed flooring and wallpaper have been being developed. A technique proposed as such a technique is a method for producing foamed wallpaper including a foamable layer, an image forming layer, and a surface protecting layer, wherein the foamable layer contains a thermoplastic resin and a foaming agent, and the image forming layer and the surface protecting layer are cross-linkable or curable by electron beam irradiation (for example, see Japanese Patent No. 5195999).

Further, a proposed image processing apparatus corrects a bossed-recessed region including bossed portions and recessed portions in a manner that the brightness of a bossed portion and a recessed portion to be approximately equal to the brightness of a step region present in the bottom of the recessed portion and continuous to a wall surface connecting the bottom of the recessed portion to the top of the bossed portion, in order to improve the image quality of the step region (for example, see Japanese Patent No. 6287352).

The present disclosure has an object to provide a printed matter producing method that can produce a printed matter having an excellent design property based on a bossed-recessed shape and an excellent image quality.

### SUMMARY OF THE INVENTION

Accoraining a foaming agent, a defoaming agent applying step of applying a defoaming agent to a predetermined region of the foamable layer to bring the defoaming agent into contact with the foamable layer, an inding to an aspect of the present disclosure, a printed matter producing method includes a foamable layer forming step of forming a foamable layer contk receiving layer forming step of forming an ink receiving layer over the foamable layer to which the defoaming agent is applied, a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, an image forming step of applying an ink over the ink receiving layer based on the print data to form an image, and a foaming step of applying energy to the foamable layer to form bosses and recesses.

The present invention can provide a printed matter producing method that can produce a printed matter having an excellent design property based on a bossed-recessed shape and an excellent image quality.

### BRIEF DESCRIPTION OF THE DRAWINGS

FIG. 1 is a schematic view illustrating an example of a printing apparatus of the present disclosure;
FIG. 2 is a schematic view illustrating another example of a printing apparatus of the present disclosure;
FIG. 3 is a schematic view illustrating an example of a bossed-recessed region of a foamable layer of the present disclosure;
FIG. 4 is a schematic view illustrating a cross-section of a printed matter in some steps of an example of a printed matter producing method of the present disclosure; and
FIG. 5 is a flowchart illustrating an example of a print data generating step of a printed matter producing method of the present disclosure.

### DESCRIPTION OF THE EMBODIMENTS

### (Printed matter producing method, and printing apparatus)

A printed matter producing method of the present disclosure includes a foamable layer forming step of forming a foamable layer containing a foaming agent, a defoaming agent applying step of applying a defoaming agent to a predetermined region of the foamable layer to bring the defoaming agent into contact with the foamable layer, an ink receiving layer forming step of forming an ink receiving layer over the foamable layer to which the defoaming agent is applied, a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, an image forming step of applying an ink over the ink receiving layer based on the print data to form an image, and a foaming step of applying energy to the foamable layer to form bosses and recesses. The printed matter producing method preferably includes a transparent layer forming step, a base material surface reforming step, and a foamable layer surface reforming step, and further includes other steps as needed. The printed matter producing method of the present disclosure preferably includes a foamable layer forming step of forming a foamable layer containing a foaming agent, a defoaming agent applying step of applying a defoaming agent containing a multifunctional monomer to a predetermined region of the foamable layer to bring the defoaming agent into contact with the foamable layer, an ink receiving layer forming step of forming an ink receiving layer containing a polymer of a polymerizable compound a over the foamable layer to which the defoaming agent is applied, a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, an image forming step of applying an ink containing a colorant and a polymerizable compound b over the ink receiving layer based on the print data to form an image, and a foaming step of applying thermal energy to the foamable layer to form bosses and recesses.

A printing apparatus of the present disclosure includes a foamable layer forming unit configured to form a foamable layer containing a foaming agent, a defoaming agent applying unit configured to apply a defoaming agent to a predetermined region of the foamable layer to bring the defoaming agent into contact with the foamable layer, an ink receiving layer forming unit configured to form an ink receiving layer over the foamable layer to which the defoaming agent is applied, a print data generating unit configured to acquire image data and shape data representing a shape of a bossed-recessed region of the foamable layer after foamed, and generate print data assigning a greater amount of an ink to a portion in the image data corresponding to an inclined portion of the bossed-recessed region based on the shape data, an image forming unit configured to apply an ink over the ink receiving layer based on the print data to form an image, and a foaming unit configured to apply energy to the foamable layer to form bosses and recesses. The printing apparatus preferably includes a transparent layer forming unit, a base material surface reforming unit, and a foamable layer surface reforming unit, and further includes other units as needed. The printing apparatus of the present disclosure preferably includes a foamable layer forming unit configured to form a foamable layer containing a foaming agent, a defoaming agent applying unit configured to apply a defoaming agent containing a multifunctional monomer to a predetermined region of the foamable layer to bring the defoaming agent into contact with the foamable layer, an ink receiving layer forming unit configured to form an ink receiving layer containing a polymer of a polymerizable compound a over the foamable layer to which the defoaming agent is applied, a print data generating unit configured to acquire image data and shape data representing a shape of a bossed-recessed region of the foamable layer after foamed, and generate print data assigning a greater amount of an ink to a portion in the image data corresponding to an inclined portion of the bossed-recessed region based on the shape data, an image forming unit configured to apply an ink containing a colorant and a polymerizable compound b over the ink receiving layer based on the print data to form an image, and a foaming unit configured to apply thermal energy to the foamable layer to form bosses and recesses.

The printed matter producing method of the present disclosure can be suitably performed by the printing apparatus of the present disclosure. The foamable layer forming step can be suitably performed by the foamable layer forming unit. The defoaming agent applying step can be suitably performed by the defoaming agent applying unit. The ink receiving layer forming step can be suitably performed by the ink receiving layer forming unit. The image forming step can be suitably performed by the image forming unit. The foaming step can be suitably performed by the foaming unit. The print data generating step can be suitably performed by the print data generating unit. The transparent layer forming step can be suitably performed by the transparent layer forming unit. The base material surface reforming step can be suitably performed by the base material surface reforming unit. The foamable layer surface reforming step can be suitably performed by the foamable layer surface reforming unit. The other steps can be suitably performed by the other units.

The printed matter producing method of the present disclosure is based on the following finding of the present inventors. Existing printed matter producing methods may not be able to impart a sufficient bossed-recessed shape to printed matters, and may not be able to impart a sufficient design property based on a bossed-recessed shape or impart a sufficient image quality (color developability) to images formed over bosses and recesses.

Existing printed matter producing methods need embossing by a mold in order to impart a bossed-recessed shape, making small-lot production difficult and production costs high.

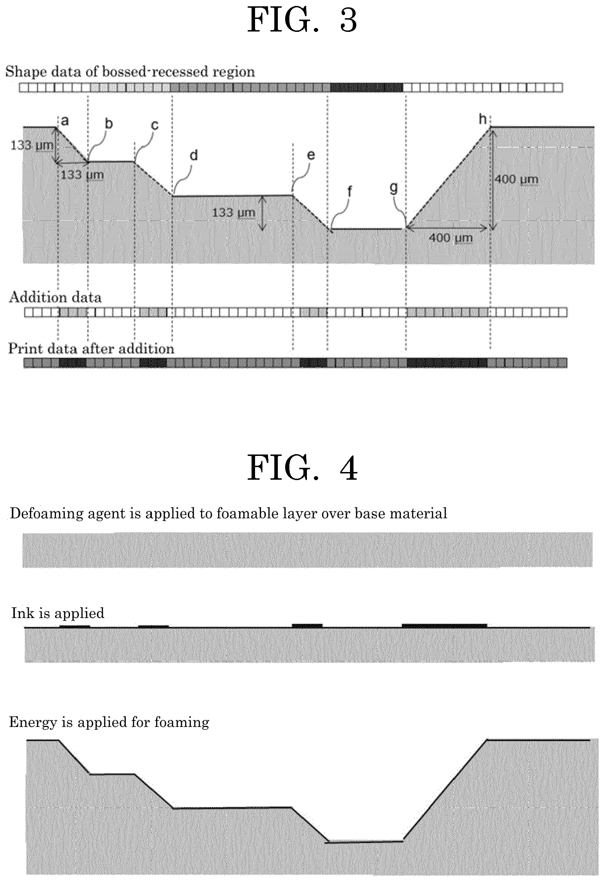

Moreover, existing printed matter producing methods are not able to sufficiently develop colors of an image formed on the bosses and recesses of a bossed-recessed shape formed by foaming a foamable layer, leading to density unevenness. This will be specifically described with reference to FIG. 3. FIG. 3 is a schematic view illustrating an example of a bossed-recessed region of a foamable layer of the present disclosure. When a bossed-recessed shape is formed, the formed bossed-recessed shape includes an inclined portion having an angle X in a range of 0<X<180 degrees and a flat portion having an angle X equal to 0 (or 180) degrees, where the angle X is an angle formed between a base material and a foamable layer. For example, in FIG. 3, the portion between the edge a and the edge b is the inclined portion, and the portion between the edge b and the edge c is the flat portion. Through formation of the bossed-recessed shape, the surface area of the foamable layer changes, and the surface of the inclined portion such as the portion between the edge a and the edge b is stretched. The present inventors have found that this may generate difference in image color developability between the inclined portion and the flat portion. The edge refers to a point that couples an inclined portion to a flat portion.

Hence, the present inventors have conducted earnest studies into, for example, a printed matter producing method that can produce a printed matter having an excellent design property based on a bossed-recessed shape and an excellent image quality, and have conceived the present disclosure. That is, the present inventors have found it possible to produce a printed matter having an excellent design property based on a bossed-recessed shape and an excellent image quality by a printed matter producing method including a foamable layer forming step of forming a foamable layer containing a foaming agent, a defoaming agent applying step of applying a defoaming agent to a predetermined region of the foamable layer to bring the defoaming agent into contact with the foamable layer, an ink receiving layer forming step of forming an ink receiving layer over the foamable layer to which the defoaming agent is applied, a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, an image forming step of applying an ink over the ink receiving layer based on the print data to form an image, and a foaming step of applying energy to the foamable layer to form bosses and recesses.

Here, the printed matter producing method of the present disclosure forms a foamable layer containing a foaming agent, and foams the foamable layer. In this way, the printed matter producing method of the present disclosure can impart an excellent design property based on a bossed-recessed shape easily to a printed matter.

Moreover, the printed matter producing method of the present disclosure includes a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, and an image forming step of applying an ink over the ink receiving layer based on the print data to form an image. In this way, the printed matter producing method of the present disclosure can increase the amount of an ink to be discharged to a stretched inclined portion of the foamable layer after foamed, provide a better image color developability, and impart an excellent image quality easily to a printed matter.

Furthermore, a preferred embodiment of the printed matter producing method of the present disclosure forms an ink receiving layer containing a polymer of a polymerizable compound a over a foamable layer and applies an ink containing a colorant and a polymerizable compound b over the ink receiving layer to form an image. In this way, the printed matter producing method of the present disclosure enhances affinity between the ink receiving layer and the ink, because the material of the ink receiving layer and the ink both contain polymerizable compounds. Therefore, the printed matter producing method of the present disclosure can improve color developability of an image formed with the ink and improve durability of the image against, for example, external shocks.

Hence, with the foamable layer forming step, the defoaming agent applying step, the ink receiving layer forming step, the image forming step, and the foaming step, and the print data generating step, the printed matter producing method of the present disclosure can produce a printed matter having an excellent design property based on a bossed-recessed shape and an excellent image quality.

### <Foamable layer forming step and foamable layer forming unit>

The foamable layer forming step is a step of forming a foamable layer containing a foaming agent.

The foamable layer forming unit is a unit configured to form a foamable layer containing a foaming agent.

The foamable layer forming unit is not particularly limited and may be appropriately selected depending on the intended purpose. Examples of the foamable layer forming unit include a combination of a known material applying unit (e.g., a coating unit and a discharging unit) with a known energy applying unit (e.g., a thermal energy unit and an active energy ray irradiation unit).

The foamable layer forming step is not particularly limited so long as a foamable layer can be formed, and it is preferable that the material applying unit apply a foamable layer forming liquid containing a foaming agent over a base material to form a film, and subsequently the energy applying unit cure the film, to form a foamable layer. In other words, it is preferable to apply a foamable layer forming liquid containing a foaming agent over a base material and subsequently cure the foamable layer forming liquid to form a foamable layer in the foamable layer forming step.

The timing to cure the foamable layer forming liquid is not particularly limited and may be appropriately selected depending on the intended purpose. For example, when curing an ink receiving layer described below and an ink that forms an image, it is possible to collectively cure the foamable layer with at least one of the ink receiving layer and the ink that forms an image.

### «Base material»

A base material to which the foamable layer forming liquid is applied is not particularly limited and may be appropriately selected. Examples of the base material include sheets such as resin films, paper impregnated with resins, synthetic paper formed of synthetic fiber, natural paper, and nonwoven fabric, cloths, wooden boards, metal plates, glass plates, ceramic plates, and building materials.

The resin films are not particularly limited and may be appropriately selected depending on the intended purpose. Examples of the resin films include: polyester films; polypropylene films; polyethylene films; plastic films of nylon, vinylon, and acrylic; and films formed of these films pasted together.

It is preferable to uniaxially or biaxially stretch the resin film in terms of strength.

The nonwoven fabric is not particularly limited and may be appropriately selected depending on the intended purpose. Examples of the nonwoven fabric include nonwoven fabric formed of polyethylene fibers sprinkled in a sheet shape and thermocompression-bonded with each other to obtain a sheet shape.

The wooden boards are not particularly limited and may be appropriately selected depending on the intended purpose. Examples of the wooden boards include plywoods such as MDF, HDF, particle boards, and veneers, and decorative laminates having sheets pasted over the surfaces. The thickness of the wooden boards may be, for example, from 2 mm through 30 mm.

The glass plates are not particularly limited and may be appropriately selected depending on the intended purpose. Examples of the glass plates include float glass, colored glass, tempered glass, wire glass, ground glass, frosted glass, and mirror glass. The thickness of the glass plates may be, for example, from 0.3 mm through 20 mm.

The building materials are not particularly limited and may be appropriately selected depending on the intended purpose. Examples of the building materials include thermosetting resins, fiberboards, and particle boards used for flooring, wallpaper, interior materials, wall-plate materials, baseboard materials, ceiling materials, and pillars, and these materials having decorative laminates of, for example, thermosetting resins, olefin, polyester, and PVC over the surfaces.

### «Foamable layer forming liquid»

The foamable layer forming liquid contains a foaming agent, preferably contains a liquid composition, and further contains other components as needed.

### -Foaming agent-

The foaming agent is not particularly limited and may be appropriately selected depending on the intended purpose so long as the foaming agent is a material that volume-expands when energy is applied. Examples of the foaming agent include: thermally expansible microcapsules and thermally degradable foaming agents, which are materials that volume-expand when heated; and soluble, foamable gases such as carbon dioxide and nitrogen, which are materials that undergo volume change in response to compression/decompression energy. Among these foaming agents, thermally expansible microcapsules are preferable because thermally expansible microcapsules have a high coefficient of thermal expansion and can form uniform, small independent cells. In the following description, the foaming agent may be referred to as volume expanding agent.

The thermally expansible microcapsules are particles having a core-shell structure that encapsulates a foaming agent with a thermoplastic resin. In response to heating, the thermoplastic resin that constitutes the shell starts to soften, the vapor pressure of the encapsulated foamable compound rises to a pressure enough to deform the particles, and the thermoplastic resin constituting the shell is drawn to expand. Examples of the foamable compound include aliphatic hydrocarbons having a low boiling point.

Commercially available products can be used as the thermally expansible microcapsules. Examples of the commercially available products include ADVANCELL EM SERIES available from Sekisui Chemical Co., Ltd., EXPANCELL DU, WU, MB, SL, and FG SERIES available from Akzo Novel N.V. (sold by Japan Fillite Co., Ltd. in Japan), MATSUMOTO MICROSPHERE F and FN SERIES available from Matsumoto Yushi-Seiyaku Co., Ltd., and KUREHA MICROSPHERE H750, H850, and H1100 available from Kureha Corporation. One of these commercially available products may be used alone or two or more of these commercially available products may be used in combination.

Examples of the thermally degradable foaming agents include organic foaming agents and inorganic foaming agents.

Examples of the organic foaming agents include azo-dicarboxylic acid amide (ADCA), azo-bisisobutylnitrile (AIBN), p,p'-oxybisbenzene sulfonyl hydrazide (OBSH), and dinitrosopentamethylenetetramine (DPT). One of these thermally degradable foaming agents may be used alone or two or more of these thermally degradable foaming agents may be used in combination.

Examples of the inorganic foaming agents include hydrocarbon salts such as sodium hydrogen carbide, carbonates, and combinations of hydrocarbon salts with organic acid salts.

The content of the foaming agent in the foamable layer forming liquid is not particularly limited, may be appropriately selected depending on the intended purpose, and is preferably 1% by mass or greater but 20% by mass or less and more preferably 5% by mass or greater but 15% by mass or less relative to the total amount of the foamable layer forming liquid.

### -Liquid composition-

The liquid composition is not particularly limited and may be appropriately selected depending on the intended purpose. Examples of the liquid composition include water, aqueous organic solvents, oil-based organic solvents, and polymerizable solvents. For example, the liquid composition may be selected depending on the liquid contact property to the foaming agent (i.e., whether the foaming function is inhibited by the liquid composition through, for example, osmosis of the liquid composition into the foaming agent). As the reference of the liquid contact property of the liquid composition, SP value (solubility parameter) may be used. For example, it is preferable to select a liquid of which SP value is apart from the SP value of the foaming agent in order to prevent compatibilization with the foaming agent.

The liquid composition has a function as, for example, a dispersion medium for the foaming agent. When the liquid composition is a polymerizable solvent (polymerizable compound), the liquid composition can also function to form a foamable layer. When the liquid composition is a liquid that is not a polymerizable solvent, it is preferable to further add a resin to the liquid composition for the liquid composition to be able to form a foamable layer.

Examples of the aqueous organic solvents include: polyvalent alcohols such as methanol, ethanol, 1-propanol, 2-propanol, ethylene glycol, diethylene glycol, triethylene glycol, tetraethylene glycol, polyethylene glycol, propylene glycol, 1,3-propanediol, 2-methyl-1,3-propanediol, 1,4-butanediol, 1,5-pentanediol, 1,6-hexanediol, glycerin, 1,2,6-hexanetriol, 2-ethyl-1,3-hexanediol, 1,2,4-butanetriol, 1,2,3-butanetriol, and petriol; polyvalent alcohol alkylethers such as ethyleneglycol monoethylether, ethyleneglycol monobutylether, diethylene glycol monomethylether, diethylene glycol monoethylether, diethyleneglycol monobutylether, triethyleneglycol monobutylether, tetraethyleneglycol monomethylether, and propyleneglycol monoethylether; polyvalent alcohol arylethers such as ethyleneglycol monophenylether and ethyleneglycol monobenzylether; nitrogen-containing heterocyclic compounds such as N-methyl-2-pyrrolidone, N-hydroxyethyl-2-pyrrolidone, 2-pyrrolidone, 1,3-dimethylimidazolidinone, and ε-caprolactam; amides such as formamide, N-methylformamide, and N,N-dimethylformamide; amines such as monoethanolamine, diethanolamine, triethanolamine, monoethylamine, diethylamine, and triethylamine; sulfur-containing compounds such as dimethylsulfoxide, sulfolane, and thiodiethanol; and propylene carbonate, ethylene carbonate, γ-butyrolactone, and acetone.

Examples of the oil-based organic solvents include: hydrocarbons such as dodecane, isododecane, hexadecane, isohexadecane, liquid paraffin, squalane, squalene, polybutene, polyisobutylene, cyclopentane, cyclohexane, polybutadiene, hydrogenated polybutadiene, polyisoprene, and hydrogenated polyisoprene.

Examples of ester oils include isopropyl myristate, isopropyl palmitate, cetyl octanoate, octyldodecyl myristate, butyl stearate, hexyl laurate, myristyl myristate, decyl oleate, hexyldecyl dimethyloctanoate, cetyl lactate, lanolin acetate, isocetyl stearate, isocetyl isostearate, di-2-ethylhexyl sebacate, di-2-hexyldecyl myristate, di-2-hexyldecyl palmitate, di-2-hexyldecyl adipate, and diisopropyl sebacate.

Examples of higher fatty acids include isostearic acid, oleic acid, palmitic acid, lauric acid, myristic acid, behenic acid, linoleic acid, and linolenic acid. A higher fatty acid that is liquid at normal temperature, such as oleic acid is particularly preferable. Examples of higher alcohols include isostearyl alcohol, oleyl alcohol, octyl dodecanol, cholesterol, stearyl alcohol, cetyl alcohol, decyl tetradecanol, hexyl decanol, behenyl alcohol, lauryl alcohol, lanoline alcohol, myristyl alcohol, and batyl alcohol. A higher alcohol that is liquid at normal temperature, such as oleyl alcohol is particularly preferable.

Examples of silicones include: dimethyl polysiloxane, cyclomethicone, diphenyl polysiloxane, alkyl polysiloxane; and compounds other than aqueous organic solvents, such as methyl acetate, ethyl acetate, propyl acetate, butyl acetate, ethyl lactate, ethyl ethoxypropionate, butanol, normal hexane, cyclohexane, methyl ethyl ketone, methyl isobutyl ketone, cyclohexanone, tetrahydrofuran, dioxane, toluene, ethyl benzene, acetophenone, and benzyl alcohol.

### -Polymerizable solvent (polymerizable compound)-

The polymerizable solvent (polymerizable compound) is not particularly limited and may be appropriately selected depending on the intended purpose so long as the polymerizable solvent is a compound that can be polymerized by, for example, application of energy. Examples of the polymerizable solvent (polymerizable compound) include monofunctional monomers, multifunctional monomers, and combinations of monofunctional monomers with multifunctional monomers.

### -Monofunctional monomer-

A monofunctional monomer includes one vinyl group, one acryloyl group, or one methacryloyl group in a molecular structure thereof.

Examples of the monofunctional monomer include γ-butyrolactone (meth)acrylate, isobornyl (meth)acrylate, formalized trimethylolpropane mono(meth)acrylate, trimethylolpropane (meth)acrylic acid benzoic acid ester, (meth)acryloylmorpholine, 2-hydroxypropyl (meth)acrylamide, N-vinylcaprolactam, N-vinylpyrrolidone, N-vinylformamide, cyclohexanedimethanolmonovinyl ether, hydroxyethylvinyl ether, diethyleneglycolmonovinyl ether, dicyclopentadiene vinyl ether, tricyclodecane vinyl ether, benzylvinyl ether, ethyloxetanemethyl vinyl ether, hydroxybutylvinyl ether, ethyl vinyl ether, ethoxy(4)nonylphenol (meth)acrylate, benzyl (meth)acrylate, and caprolactone (meth)acrylate. One of these monofunctional monomers may be used alone or two or more of these monofunctional monomers may be used in combination.

Among these monofunctional monomers, isobornyl (meth)acrylate is preferable because isobornyl (meth)acrylate has a high glass transition temperature (Tg) and a good robustness.

The content of the monofunctional monomer is preferably 80% by mass or greater but 99.5% by mass or less and more preferably 90% by mass or greater but 95% by mass or less relative to the total amount of the polymerizable compound.

### -Multifunctional monomer-

A multifunctional monomer is a compound that includes two vinyl groups, two acryloyl groups, or two methacryloyl groups in a molecular structure thereof.

Examples of the multifunctional monomer include ethyleneglycol di(meth)acrylate, hydroxypivalic acid neopentylglycol di(meth)acrylate, polytetramethyleneglycol di(meth)acrylate, diethyleneglycol di(meth)acrylate, triethyleneglycol di(meth)acrylate, tetraethyleneglycol di(meth)acrylate, polyethylene glycol dimethacrylate [CH₂=CH-CO-(OC₂H₄)n-OCOCH=CH₂ (n≈9), the same (n≈14), and the same (n≈23)], dipropyleneglycol di(meth)acrylate, tripropyleneglycol di(meth)acrylate, polypropylene glycol dimethacrylate [CH₂=C(CH₃)-CO-(OC₃H₆)ₙ-OCOC(CH₃)=CH₂ (n≈7)], 1,3-butanediol di(meth)acrylate, 1,4-butanediol di(meth)acrylate, 1,6-hexanediol di(meth)acrylate, 1,9-nonanediol di(meth)acrylate, neopentylglycol di(meth)acrylate, tricyclodecanedimethanol di(meth)acrylate, propylene oxide-modified bisphenol A di(meth)acrylate, polyethylene glycol di(meth)acrylate, dipentaerythritol hexa(meth)acrylate, propylene oxide-modified tetramethylolmethane tetra(meth)acrylate, dipentaerythritol hydroxypenta(meth)acrylate, caprolactone-modified dipentaerythritol hydroxypenta(meth)acrylate, ditrimethylolpropane tetra(meth)acrylate, pentaerythritol tetra(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified trimethylolpropane tri(meth)acrylate, pentaerythritol tri(meth)acrylate, tris(2-hydroxyethyl)isocyanurate tri(meth)acrylate, ethoxylated neopentylglycol di(meth)acrylate, propylene oxide-modified neopentylglycol di(meth)acrylate, propylene oxide-modified glyceryl tri(meth)acrylate, polyester di(meth)acrylate, polyester tri(meth)acrylate, polyester tetra(meth)acrylate, polyester penta(meth)acrylate, polyester poly(meth)acrylate, polyurethane di(meth)acrylate, polyurethane tri(meth)acrylate, polyurethane tetra(meth)acrylate, polyurethane penta(meth)acrylate, polyurethane poly(meth)acrylate, triethyleneglycoldivinyl ether, cyclohexanedimethanoldivinyl ether, diethyleneglycoldivinyl ether, triethyleneglycoldivinyl ether, and ethoxylated (4)bisphenol di(meth)acrylate. One of these multifunctional monomers may be used alone or two or more of these multifunctional monomers may be used in combination.

The molecular weight/functional number of the multifunctional monomer is preferably, for example, 250 or greater because a design property (volume expansibility) and robustness can be satisfied at the same time.

The content of the multifunctional monomer and an oligomer in the polymerizable compound is preferably 0.5% by mass or greater but 20% by mass or less and more preferably 5% by mass or greater but 10% by mass or less relative to the total amount of the polymerizable compound. When the content of the multifunctional monomer and an oligomer is 10% by mass or less, there is an advantage that a design property (foamability) and robustness can be satisfied at the same time.

The content of the polymerizable compound is not particularly limited, may be appropriately selected depending on the intended purpose, and is preferably 60% by mass or greater but 90% by mass or less and more preferably 70% by mas or greater but 85% by mass or less relative to the total amount of the foamable layer forming liquid. When the content of the polymerizable compound is 70% by mass or less, adhesiveness of the foaming agent in the foamable layer can be increased.

### -Other components-

The other components in the foamable layer forming liquid are not particularly limited and may be appropriately selected depending on the intended purpose. Examples of the other components include a binder resin, a polymerization initiator, a filler, a foaming accelerator, a dispersant, a colorant, an organic solvent, an antiblocking agent, a thickener, an antiseptic, a stabilizer, a deodorant, a fluorescent agent, an ultraviolet screener, and a surfactant. Among these other components, it is preferable to add a polymerization initiator when the liquid composition is a polymerizable solvent (polymerizable compound). It is preferable to add a binder resin when, for example, the liquid composition is not a polymerizable compound.

### --Binder resin--

The binder resin is not particularly limited and may be appropriately selected depending on the intended purpose so long as the binder resin can support the foaming agent. Examples of the binder resin include water-soluble resins, emulsion resins, and other resins.

Examples of the water-soluble resins include: natural resins such as plant polymers (e.g., gum Arabic, gum tragacanth, guar gum, karaya gum, locust bean gum, arabinogalactan, pectin, quince seed, and starch), seaweed polymers (e.g., alginic acid, carrageenan, and agar), animal polymers (e.g., gelatin, casein, albumin, and collagen), microbial polymers (e.g., Xanthan gum and dextran) and shellac; semi-synthetic resins such as fiber polymers (e.g., methyl cellulose, ethyl cellulose, hydroxyethyl cellulose, hydroxypropyl cellulose, and carboxymethyl cellulose), starch-based polymers (e.g., starch sodium glycolate and sodium starch phosphoric acid ester), and seaweed polymers (e.g., sodium alginate and alginic acid propyleneglycol ester); and purely synthetic resins such as vinyl-based polymers (e.g., polyvinyl alcohol, polyvinyl pyrrolidone, and polyvinylmethyl ether), acrylic-based resins (e.g., noncrosslinked polyacrylamide, polyacrylic acid and alkali metal salts of polyacrylic acid, water-soluble styrene-acrylic resin), water-soluble styrenemaleic acid resins, water-soluble vinyl naphthalene-acrylic resins, water-soluble vinyl naphthalene-maleic acid resins, and alkali metal salts of β naphthalenesulfonic acid formalin condensate.

Examples of the emulsion resins include acrylic-based resins, vinyl acetate-based resins, styrene-butadiene-based resin, vinyl chloride-based resins, acrylic-styrene-based resins, butadiene-based resins, and styrene-based resins.

Examples of other resins that can be used as the binder resin include polyester resins and acrylic resins that are soluble in an oil-based organic solvent.

### --Polymerization initiator--

Examples of the polymerization initiator include a thermal polymerization initiator and a photopolymerization initiator. Of these polymerization initiators, a photopolymerization initiator is preferred in terms of durability of a design property and an image quality attributable to a bossed-recessed shape.

A photopolymerization initiator needs at least to be able to produce active species such as radicals and cations in response to energy of active energy rays and initiate polymerization of a polymerizable compound. As such a polymerization initiator, one of, for example, known radical polymerization initiators, cationic polymerization initiators, and base generators may be used alone or two or more of these known radical polymerization initiators, cationic polymerization initiators, and base generators may be used in combination. Among these polymerization initiators, a radical polymerization initiator is preferable.

The content of the polymerization initiator is preferably 1% by mass or greater but 20% by mass or less and more preferably 5% by mass or greater but 15% by mass or less relative to the total amount of the foamable layer forming liquid in order to obtain a sufficient curing speed.

Examples of the radical polymerization initiator include aromatic ketones, acylphosphine oxide compounds, aromatic onium salt compounds, organic peroxides, thio compounds (e.g., thioxanthone compounds, and thiophenyl group-containing compounds), hexaaryl biimidazole compounds, ketoxime ester compounds, borate compounds, azinium compounds, metallocene compounds, active ester compounds, compounds containing a carbon-halogen bond, and alkylamine compounds.

A polymerization accelerator (sensitizer) may be used in combination with the polymerization initiator.

The polymerization accelerator is not particularly limited and may be appropriately selected depending on the intended purpose. Examples of the polymerization accelerator include amine compounds such as trimethylamine, methyl dimethanolamine, triethanolamine, p-diethyl aminoacetophenone, ethyl p-dimethylaminobenzoate, p-dimethylaminobenzoic acid-2-ethylhexyl, N,N-dimethylbenzylamine, and 4,4'-bis(diethylamino)benzophenone.

The content of the polymerization accelerator is not particularly limited and may be appropriately set depending on the polymerization initiator used and the amount of the polymerization initiator.

### --Surfactant--

A surfactant may be added in order to reduce the surface tension for leveling adjustment during application to a base material or for adjustment of spreadability of the defoaming agent.

Examples of the surfactant include: glycerin fatty acid esters such as glycerin fatty acid ester, sorbitan fatty acid ester, polyethylene glycol fatty acid ester, glyceryl monostearate, glyceryl monooleate, diglyceryl monostearate, and diglyceryl monoisostearate; glycol fatty acid esters such as propyleneglycol monostearate; sorbitan fatty acid esters such as sorbitan monostearate and sorbitan monooleate; and sucrose stearic acid ester, POE (4.2) lauryl ether, POE (40) hydrogenated castor oil, POE (10) cetyl ether, POE (9) lauryl ether, POE (10) oleyl ether, POE (20) sorbitan monooleate, POE (6) sorbit monolaurate, POE (15) cetyl ether, POE (20) sorbitan monopalmitate, POE (15) oleyl ether, POE (100) hydrogenated castor oil, POE (20) POP (4) cetyl ether, POE (20) cetyl ether, POE (20) oleyl ether, POE (20) stearyl ether, POE (50) oleyl ether, POE (25) cetyl ether, POE (25) lauryl ether, POE (30) cetyl ether, and POE (40) cetyl ether. One of these surfactants may be used alone or two or more of these surfactants may be used as a mixture.

It is preferable to add the surfactant in an amount of, for example, 0.1% by mass or greater but 2% by mass or less relative to the total amount of the foamable layer forming liquid.

### --Filler--

Examples of the filler include aluminum hydroxide, magnesium hydroxide, barium hydroxide, calcium carbonate, magnesium carbonate, calcium sulfate, barium sulfate, ferrous hydroxide, basic zinc carbonate, basic lead carbonate, silica sand, clay, talc, silicas, titanium dioxide, and magnesium silicate. One of these fillers may be used alone or two or more of these fillers may be used in combination. Among these fillers, calcium carbonate, magnesium carbonate, aluminum hydroxide, and magnesium hydroxide are preferable.

### --Foaming accelerator--

The foaming accelerator is not particularly limited and may be appropriately selected depending on the intended purpose. Examples of the foaming accelerator include zinc naphthenate, zinc acetate, zinc propionate, zinc 2-ethyl pentanoate, zinc 2-ethyl-4-methyl pentanoate, zinc 2-methyl hexanoate, zinc 2-ethyl hexanoate, zinc isooctylate, zinc n-octylate, zinc neodecanoate, zinc isodecanoate, zinc n-decanoate, zinc laurate, zinc myristate, zinc palmitate, zinc stearate, zinc isostearate, zinc 12-hydroxystearate, zinc behenate, zinc oleate, zinc linoleate, zinc linolenate, zinc ricinoleate, zinc benzoate, zinc o, m, p-toluate, zinc p-t-butylbenzoate, zinc salicylate, zinc phthalate, zinc salt of phthalic acid monoalkyl (C4 to 18) ester, zinc dehydroacetate, zinc dibutyldithiocarbamate, zinc aminocrotonate, zinc salt of 2-mercaptobenzothiazole, zinc pyrithione, and zinc complex of urea or diphenylurea. One of these foaming accelerators may be used alone or two or more of these foaming accelerators may be used in combination.

### --Thickener--

Examples of the thickener include polycyanoacrylate, polylactic acid, polyglycolic acid, polycaprolactone, polyacrylic acid alkyl ester, and polymethacrylic acid alkyl ester.

### --Antiseptic--

Examples of the antiseptic include antiseptics that have been hitherto used and do not initiate polymerization of monomers, such as potassium sorbate, sodium benzoate, sorbic acid, and chlorocresol.

### --Stabilizer--

The stabilizer serves to suppress polymerization of a monomer that is, for example, under storage. Examples of the stabilizer include anionic stabilizers and free radical stabilizers.

Examples of the anionic stabilizers include metaphosphoric acid, maleic acid, maleic anhydride, alkyl sulfonic acid, phosphorus pentoxide, iron (III) chloride, antimony oxide, 2,4,6-trinitrophenol, thiol, alkylsulfonyl, alkylsulfone, alkylsulfoxide, alkyl sulfite, sulton, sulfur dioxide, and sulfur trioxide.

Examples of the free radical stabilizers include hydroquinone and catechol, or derivatives of hydroquinone and catechol.

The foamable layer forming liquid used in the present disclosure can be produced using the various components described above, and the preparation devices and conditions are not particularly limited. For example, the foamable layer forming liquid can be prepared by subjecting, for example, the foaming agent and the liquid composition to a dispersion treatment using a dispersing machine such as a ball mill, a kitty mill, a disk mill, a pin mill, and a DYNO-MILL, and further mixing the resultant with, for example, a polymerization initiator and a surfactant.

The static surface tension of the foamable layer forming liquid used in the present disclosure can be measured, for example, with an automatic surface tensiometer DY-300 available from Kyowa Interface Science, Inc. according to a plate method or a ring method. The static surface tension of the foamable layer forming liquid may be appropriately adjusted depending on the purposes of use or devices used, and is preferably 15 mN/m or higher but 50 mN/m or lower at 25 degrees C.

The viscosity of the foamable layer forming liquid can be measured with, for example, a rheometer MCR301 available from Anton Paar GmbH at a shear rate of 10/s in a range of from 20 degrees C through 65 degrees C using a cone plate CP25-1. The viscosity of the foamable layer forming liquid may be appropriately adjusted depending on the purposes of use or devices used, and is preferably 10 mPa·s or higher but 20,000 mPa·s or lower at 25 degrees C.

The method for applying the foamable layer forming liquid over a base substrate is not particularly limited and may be appropriately selected depending on the intended purpose. Examples of the method include coating methods such as a knife coating method, a nozzle coating method, a die coating method, a lip coating method, a comma coating method, a gravure coating method, a rotary screen coating method, a reverse roll coating method, a roll coating method, a spin coating method, a kneader coating method, a bar coating method, a blade coating method, a casting method, a dipping method, and a curtain coating method, and an inkjet method.

In the present disclosure, in the foamable layer forming step, it is preferable to apply the foamable layer forming liquid containing a foaming agent and a polymerizable solvent (polymerizable compound) serving as a liquid composition over a base material and subsequently cure the foamable layer forming liquid to form a foamable layer.

The method for curing the foamable layer forming liquid when curing the foamable layer forming liquid is not particularly limited and may be appropriately selected depending on the intended purpose. The method may be performed in an energy applying step.

The energy applying step is a step of applying energy to a target layer. For example, the energy applying step can be performed by an energy applying unit.

Examples of the energy include heat and active energy rays.

When the energy is thermal energy, for example, it is possible to cure and foam the foamable layer at the same time by application of thermal energy to the foamable layer. In other words, when curing the foamable layer forming liquid by application of thermal energy, it is possible to collectively perform a foaming step of foaming the foaming agent. When applying a defoaming agent to the foamable layer, for example, it is possible to three-dimensionally crosslink the region to which the defoaming agent is applied.

A unit configured to apply thermal energy is not particularly limited and may be appropriately selected depending on the intended purpose. Examples of the unit include an infrared heater, a hot air heater, and a heating roller.

The heating temperature when applying thermal energy is not particularly limited, may be appropriately selected depending on the intended purpose so long as the foamable layer can be thermally set, may be higher than or equal to the thermal decomposition temperature of the foaming agent, for example, 100 degrees C or higher but 200 degrees C or lower, and may be lower than the thermal decomposition temperature of the foaming agent. The heating temperature may be appropriately selected depending on whether to collectively foam the foaming agent when curing the foamable layer forming liquid.

When the energy is active energy rays, for example, the foamable layer is cured by irradiation with active energy rays.

### -Active energy rays-

Active energy rays are not particularly limited, so long as they are able to give necessary energy for allowing polymerization reaction of polymerizable components in the composition to proceed. Examples of the active energy rays include electron beams, α-rays, β-rays, γ-rays, and X-rays, in addition to ultraviolet rays. When a light source having a particularly high energy is used, polymerization reaction can be allowed to proceed without a polymerization initiator. In addition, in the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

The curing conditions are not particularly limited and may be appropriately selected depending on the intended purpose. For ultraviolet rays, an irradiator that can irradiate a target with ultraviolet rays at an intensity of 6 W/cm or higher from an irradiation distance of 2 mm is preferable.

For electron beams, an accelerating voltage that can give a dose of 15 kGy or higher to the farthest position of the curing target from an electron beam irradiator is preferable.

The average thickness of the foamable layer (before foamed) is not particularly limited, may be appropriately selected depending on the intended purpose, and is preferably 50 micrometers or greater, more preferably 100 micrometers or greater, yet more preferably 250 micrometers or greater, and particularly preferably 300 micrometers or greater but 500 micrometers or less.

When the average thickness of the foamable layer (before foamed) is 50 micrometers or greater, a foamable layer having level differences by bosses and recesses can be formed, making it possible to impart a design property attributable to an excellent bossed-recessed shape.

The average thickness of the foamable layer after foamed is not particularly limited, may be appropriately selected depending on the intended purpose, and is preferably 100 micrometers or greater, 310 micrometers or greater, 400 micrometers or greater, and particularly preferably 400 micrometers or greater but 2,000 micrometers or less.

When the average thickness of the foamable layer after foamed is 100 micrometers or greater, a foamable layer having level differences by bosses and recesses due to the defoaming agent can be formed, making it possible to impart a design property attributable to an excellent bossed-recessed shape.

As the method for obtaining an average of the average thickness, the foamable layer may be scraped off at different five positions, and the height of each scraped portion from the base material to the surface of the foamable layer may be measured with, for example, a laser microscope VK-X100 available from Keyence Corporation, to calculate the average.

It is preferable that the foamable layer of the present disclosure have, for example, an average thickness after foamed that is twice or more and more preferably four times or more greater than the average thickness before foamed. This makes it possible to form a foamable layer having level differences by bosses and recesses and impart a design property attributable to an excellent bossed-recessed shape.

### <Defoaming agent applying step and defoaming agent applying unit>

The defoaming agent applying step is a step of applying a defoaming agent to a predetermined region of the foamable layer to bring the defoaming agent into contact with the foamable layer. It is preferable that the defoaming agent contain a multifunctional monomer.

The defoaming agent applying unit is a unit configured to apply a defoaming agent to a predetermined region of the foamable layer to bring the defoaming agent into contact with the foamable layer.

The method for applying the defoaming agent and bringing the defoaming agent into contact is not particularly limited and may be appropriately selected depending on the intended purpose. An inkjet method is preferable because the inkjet method can flexibly adapt to various foaming patterns (defoaming patterns). In other words, in the present disclosure, by applying a defoaming agent by an inkjet method in the defoaming agent applying step, it is possible to flexibly adapt to various foaming patterns (defoaming patterns).

The driving method of a discharging head used in the inkjet method may be, for example, a method employing an on-demand head that uses a PZT as a piezoelectric element actuator, or applies thermal energy, or uses an electrostatic force-applied actuator, and a method employing a continuous jet-type charge control-type head.

The amount of the defoaming agent to be applied is not particularly limited, may be appropriately selected depending on the intended purpose, and is preferably 3 microliters/cm² or less over the surface of a foamable layer.

The discharging speed at which the defoaming agent is discharged is not particularly limited, may be appropriately selected depending on the intended purpose, and is preferably 5 m/s or higher and more preferably 5 m/s or higher but 15 m/s or lower. This makes it possible to discharge the defoaming agent more stably. The dot density (image resolution) of liquid droplets of the defoaming agent discharged is preferably 240 dpi × 240 dpi (dot per inch) or higher.

The defoaming agent is not particularly limited and may be appropriately selected depending on the intended purpose so long as the defoaming agent suppresses foaming of the foaming agent. It is preferable that the defoaming agent contain a multifunctional monomer and further contain other components as needed because this makes it possible to suppress foaming of the foaming agent in a suitable manner.

As the multifunctional monomer, the same multifunctional monomer as described above as a component of the foamable layer forming liquid of the foamable layer can be used, and examples of the multifunctional monomer include 1,6-hexanediol di(meth)acrylate, 1,3-butyleneglycol diacrylate, 1,4-butanediol diacrylate, diethyleneglycol diacrylate, neopentylglycol diacrylate, and dipropyleneglycol diacrylate. Moreover, a mixture of different multifunctional monomers, a mixture of a multifunctional monomer with a monofunctional monomer, a mixture of a multifunctional oligomer with a monofunctional monomer, and a mixture of a monofunctional monomer, a multifunctional monomer, and a multifunctional oligomer may be used.

Because a multifunctional monomer is three-dimensionally crosslinked in response to, for example, application of energy, the defoaming agent's containing a multifunctional monomer has an advantage that accurate control of on or off of foaming (whether to foam a region) can be realized by application of the defoaming agent to a predetermined region of a foamable layer and application of energy, making it possible to impart a design property attributable to an excellent bossed-recessed shape to a printed matter.

Like the foamable layer forming liquid, other components such as a polymerization initiator and a surfactant may be added in the defoaming agent.

The static surface tension of the defoaming agent may be appropriately adjusted depending on the purposes of use or devices used, and is preferably 20 mN/m or higher but 55 mN/m or lower at 25 degrees C.

The viscosity of the defoaming agent may be appropriately adjusted depending on the purpose of use or devices used, and is preferably 1 mPa·s or higher but 100 mPa·s or lower at 25 degrees C.

In the foamable layer, the predetermined region to which the defoaming agent is applied and brought into contact may be identified based on, for example, a boss/recess pattern needed to be formed in a printed matter to be produced (i.e., a boss/recess pattern of a printed matter to be produced). In the defoaming agent applying step, for example, the defoaming agent may be applied and brought into contact with portions (i.e., regions at which the foamable layer is not to be foamed) corresponding to recesses of the boss/recess pattern of a printed matter to be produced, to suppress foaming of the foamable layer in the foaming step. This makes it possible to form an optionally selected bossed-recessed shape. It is possible to control the foaming height by varying the application amount of the defoaming agent per area, the concentration of the defoaming agent, and the kind of the defoaming agent. For example, it is possible to foam the foamable layer to heights of two levels by two-level variation of the application amount of the defoaming agent per area.

### <Ink receiving layer forming step and ink receiving layer forming unit>

The ink receiving layer forming step is a step of forming an ink receiving layer over the foamable layer to which the defoaming agent is applied. The ink receiving layer is not particularly limited and may be appropriately selected depending on the intended purpose so long as the ink receiving layer is a material that has a high affinity with an ink and on which an image can be formed with an ink. It is preferable that an ink containing a colorant and a polymerizable compound b be used as an ink described below and that the ink receiving layer contain a polymer of a polymerizable compound a, in terms of enhancing affinity with an ink, improving color developability of an image formed with an ink, and improving durability of an image against, for example, external shocks.

The ink receiving layer forming unit is a unit configured to form an ink receiving layer over the foamable layer to which the defoaming agent is applied.

The ink receiving layer forming unit is not particularly limited and may be appropriately selected depending on the intended purpose. For example, the ink receiving layer forming unit may be a combination of a known material applying unit (e.g., a coating unit and a discharging unit) with a known energy applying unit (e.g., a thermal energy applying unit and an active energy ray irradiation unit), like the foamable layer forming unit.

The ink receiving layer forming step is not particularly limited so long as an ink receiving layer can be formed, and it is preferable that the material applying unit apply an ink receiving layer forming liquid containing a polymerizable compound a over a base material to form a film, and subsequently the energy applying unit cure the film, to form an ink receiving layer. In other words, it is preferable to apply an ink receiving layer forming liquid containing a polymerizable compound a over a foamable layer and subsequently cure the ink receiving layer forming liquid to form an ink receiving layer in the ink receiving layer forming step.

The timing to cure the ink receiving layer forming liquid is not particularly limited and may be appropriately selected depending on the intended purpose. For example, when curing a foamable layer and an ink that forms an image, the ink receiving layer may be collectively cured with at least one of the foamable layer and the ink that forms an image. It is preferable to cure the ink receiving layer and the ink that forms an image collectively.

### <<Ink receiving layer forming liquid>>

The ink receiving layer forming liquid preferably contains a polymerizable compound a, more preferably contains a polymerization initiator, and further contains other components as needed.

### -Polymerizable compound a-

The same polymerizable solvent (polymerizable compound) as described above as a component of the foamable layer forming liquid of the foamable layer can be used as the polymerizable compound a. Two or more kinds of polymerizable compounds may be contained. In terms of a quick drying property of the polymerizable compound a, the content of the polymerizable compound a is preferably 50% by mass or greater but 99% by mass or less and more preferably 80% by mass or greater but 95% by mass or less relative to the total amount of the ink receiving layer forming liquid.

### -Polymerization initiator-

The same polymerization initiator as described above as a component of the foamable layer forming liquid of the foamable layer described above can be used as the polymerization initiator. The content of the polymerization initiator is preferably 1% by mass or greater but 20% by mass or less and more preferably 5% by mass or greater but 15% by mass or less relative to the total amount of the ink receiving layer forming liquid in order to obtain a sufficient curing speed.

### -Other components-

Other components of the ink receiving layer forming liquid are not particularly limited and may be appropriately selected depending on the intended purpose. The same components as described above as the other components of the foamable layer forming liquid may be selected.

The static surface tension of the ink receiving layer forming liquid may be appropriately adjusted depending on the purposes of use and devices used, and is preferably 15 mN/m or higher but 50 mN/m or lower at 25 degrees C.

The viscosity of the ink receiving layer forming liquid may be appropriately adjusted depending on the purposes of use and devices used, and is preferably 10 mPa·s or higher but 20,000 mPa·s or lower at 25 degrees C.

The method for applying the ink receiving layer forming liquid over the foamable layer is not particularly limited and may be appropriately selected depending on the intended purpose. Examples of the method include coating methods such as a knife coating method, a nozzle coating method, a die coating method, a lip coating method, a comma coating method, a gravure coating method, a rotary screen coating method, a reverse roll coating method, a roll coating method, a spin coating method, a kneader coating method, a bar coating method, a blade coating method, a casting method, a dipping method, and a curtain coating method, and an inkjet method.

The amount of the ink receiving layer forming liquid to be applied (the average film thickness of the ink receiving layer) is not particularly limited, may be appropriately selected depending on the intended purpose, and is preferably 1 micrometer or greater, and more preferably 2 micrometers or greater but 50 micrometers or less. When the average film thickness of the ink receiving layer is 1 micrometer or greater, a better image quality can be obtained. The film thickness as used herein refers to a film thickness of the ink receiving layer forming liquid after cured (or a formed ink receiving layer). As the method for obtaining an average of the average film thickness, a coating film cross-section including the foamable layer and the ink receiving layer may be microscopically observed, and the thickness of the ink receiving layer may be measured at different five positions, to calculate an average.

The method for curing the ink receiving layer forming liquid when curing the ink receiving layer forming liquid is not particularly limited and may be appropriately selected depending on the intended purpose. Like the foamable layer, the method can be performed in an energy applying step.

When energy is thermal energy, the ink receiving layer can be cured by application of thermal energy.

The heating temperature when applying thermal energy is not particularly limited and may be appropriately selected depending on the intended purpose so long as the ink receiving layer can be thermally set.

When the energy is active energy rays, the ink receiving layer can be cured by irradiation with active energy rays.

The curing conditions are not particularly limited and may be appropriately selected depending on the intended purpose. For ultraviolet rays, an irradiator that can irradiate a target with ultraviolet rays at an intensity of 6 W/cm or higher from an irradiation distance of 2 mm is preferable.

For electron beams, an accelerating voltage that can give a dose of 15 kGy or higher to the farthest position of the curing target from an electron beam irradiator is preferable.

### <Image forming step and image forming unit>

The image forming step is a step of applying an ink over the ink receiving layer based on print data to form an image. The ink is not particularly limited and may be appropriately selected depending on the intended purpose so long as the ink can form an image over the ink receiving layer. It is preferable that the ink receiving layer contain a polymer of a polymerizable compound a and that an image be formed over the ink receiving layer with an ink containing a colorant and a polymerizable compound b, in terms of enhancing affinity between the ink receiving layer and the ink, improving color developability of the image formed with the ink, and improving durability of the image against, for example, external shocks.

The image forming unit is a unit configured to apply an ink over the ink receiving layer based on print data to form an image.

The image forming step and the image forming unit discharge the ink based on print data described below.

The image forming unit is not particularly limited and may be appropriately selected depending on the intended purpose. Examples of the image forming unit include a combination of a known material applying unit (e.g., a coating unit and a discharging unit) with a known energy applying unit (e.g., a thermal energy applying unit and an active energy ray irradiation unit) like the foamable layer forming unit.

The image forming step is not particularly limited so long as an image can be formed. For example, it is preferable that the material applying unit apply an ink containing a colorant and a polymerizable compound b over an ink receiving layer to form a film, and subsequently the energy applying unit cure the film, to form an image. In other words, it is preferable to apply an ink over an ink receiving layer and subsequently cure the ink to form an image in the image forming step. This makes it possible to better improve durability of the image against, for example, external shocks.

The timing to cure the ink is not particularly limited and may be appropriately selected depending on the intended purpose. For example, when curing a foamable layer and an ink receiving layer, the ink that forms an image may be collectively cured with at least one of the foamable layer and the ink receiving layer. It is preferable to cure an ink receiving layer and the ink that forms an image collectively.

In other words, in the present disclosure, it is preferable to collectively perform curing of the ink receiving layer forming liquid in the ink receiving layer forming step and curing of the ink in the image forming step. In the present disclosure, this makes it possible to better integrate the ink receiving layer with the image formed of the ink, better improve color developability of the image formed of the ink, and better improve durability of the image against, for example, external shocks.

The method for applying an ink over the ink receiving layer is not particularly limited and may be appropriately selected depending on the intended purpose. An inkjet method is preferable because an inkjet method can flexibly adapt to productivity and a wide variety of products in small lots. In other words, in the present disclosure, it is possible to improve productivity and flexibly adapt to production of small lots of a wide variety of printed matters by applying an ink over an ink receiving layer by an inkjet method in the image forming step.

The driving method of a discharging head used in the inkjet method may be a method using, for example, a method employing an on-demand head using a PZT (lead zirconate titanate) as a piezoelectric element actuator, a method of applying thermal energy, an electrostatic force-applied actuator, and a method employing a continuous jet-type charge control-type head.

As the ink applied in the image forming step, there may be three, four, or more kinds of inks depending on the colorant (pigment) contained in the inks, and, for example, each ink is applied using a separate inkjet head. Alternatively, only one head including a plurality of nozzle lines may be used, for the different kinds of inks to be discharged from different nozzle lines. Depending on the image resolution of the image to be formed in the image forming step and the number of times the head is scanned, it is preferable to vary the head nozzle density for discharging each. The head nozzle density may be, for example, 240 npi (nozzle per inch), 300 npi, 600 npi, and 1,200 npi.

The amount of the ink to be applied is not particularly limited, may be appropriately selected depending on the intended purpose, and is preferably 3 microliters/cm² or less over the surface of an ink receiving layer. When the amount of the ink applied is 3 microliters/cm² or less over the surface of an ink receiving layer, it is possible to suppress undesirable coalescing of ink droplets, color mixing of inks, and color gamut reduction, and obtain a better image quality.

The ink discharging speed is not particularly limited, may be appropriately selected depending on the intended purpose, and is preferably 5 m/s or higher and more preferably 5 m/s or higher but 15 m/s or lower. In this way, the ink can be discharged more stably. The dot density (image resolution) of liquid droplets of the ink to be discharged is preferably 240 dpi × 240 dpi (dot per inch) or higher.

The shape of the image is not particularly limited and may be appropriately selected depending on the intended purpose. For example, it is possible to form an optionally selected image (colorant layer) by discharging an ink using, for example, an inkjet head based on data of the image on a printed matter to be produced.

### <<Ink>>

The ink contains a colorant and a polymerizable compound b preferably contains a polymerization initiator, and further contains other components as needed.

### -Colorant-

As a colorant, various pigments and dyes that apply colors of black, white, magenta, cyan, yellow, green, orange, and purple, and gloss colors such as gold and silver may be used depending on the intended purpose and requisite properties of the ink in the present disclosure.

The content of the colorant may be appropriately determined in consideration of, for example, a desired color density and dispersibility in the composition, is not particularly limited, and is preferably 0.1% by mass or greater but 20% by mass or less and more preferably 1% by mass or greater but 10% by mass or less relative to the total amount of the ink.

As the colorant, inorganic pigments and organic pigments may be used. One of these pigments may be used alone or two or more of these pigments may be used in combination.

As the inorganic pigment, for example, carbon black (C.I. pigment black 7) such as furnace black, lamp black, acetylene black, and channel black, iron oxide, and titanium oxide can be used.

Examples of the organic pigment include azo-pigments such as insoluble azo-pigments, condensed azo pigments, azo lake, and chelate azo-pigments, polycyclic pigments such as phthalocyanine pigments, perylene and perinone pigments, anthraquinone pigments, quinacridone pigments, dioxane pigments, thioindigo pigments, isoindolinone pigments, and quinophthalone pigments, dye chelates (for example, basic dye chelates and acid dye chelates), dye lake (for example, basic dye lake and acid dye lake), nitro pigments, nitroso pigments, aniline black, and daylight fluorescent pigments.

The ink may further contain a dispersant in order to better improve the dispersibility of the pigments.

The dispersant is not particularly limited. Examples of the dispersant include dispersants commonly used for preparing pigment dispersions such as polymeric dispersants.

As the dyes, for example, acid dyes, direct dyes, reactive dyes, and basic dyes can be used. One of these dyes may be used alone or two or more of these dyes may be used in combination.

### -Polymerizable compound b-

As the polymerizable compound b, the same polymerizable solvent (polymerizable compound) as described above as a component of the foamable layer forming liquid of a foamable layer can be used.

The content of the polymerizable compound b in the ink is not particularly limited, may be appropriately selected depending on the intended purpose, and is preferably 70% by mass or greater but 95% by mass or less relative to the total amount of the ink.

### -Polymerization initiator-

As the polymerization initiator, the same polymerization initiator as described above as a component of the foamable layer forming liquid of a foamable layer can be used.

The ink may further contain a dispersant to better improve the dispersibility of the pigments. The dispersant is not particularly limited. Examples of the dispersant include dispersants commonly used for preparing pigment dispersions such as polymeric dispersants.

### -Other components-

The other components in the ink are not particularly limited and may be appropriately selected depending on the intended purpose. Examples of the other components include an organic solvent, a surfactant, a polymerization inhibitor, a leveling agent, an anti-foaming agent, a fluorescent brightener, a permeation promotor, a wetting agent (humectant), a fixing agent, a viscosity stabilizer, a fungicide, an antiseptic, an antioxidant, an ultraviolet absorbent, a chelate agent, a pH adjustor, and a thickener.

### --Organic solvent--

The ink in the present disclosure may contain an organic solvent. If possible, it is preferable to spare the organic solvent. A composition free of an organic solvent, particularly, a volatile organic solvent (volatile organic compounds (VOC)-free composition) enhances safety at where the composition is handled and makes it possible to prevent pollution of the environment. Incidentally, the "organic solvent" represents a conventional non-reactive organic solvent, for example, ether, ketone, xylene, ethyl acetate, cyclohexanone, and toluene, which is clearly distinguished from reactive monomers. Furthermore, "free of" an organic solvent means that no organic solvent is substantially contained. The content thereof is preferably less than 0.1% by mass.

### -Preparation of colorant composition-

The ink used in the present disclosure can be prepared by using the various components described above. The preparation devices and conditions are not particularly limited. For example, the ink can be prepared by subjecting, for example, a pigment serving as a colorant and a dispersant to a dispersion treatment using a dispersing machine such as a ball mill, a kitty mill, a disk mill, a pin mill, and a DYNO-MILL to prepare a pigment liquid dispersion, and further mixing the pigment liquid dispersion with, for example, a polymerizable compound, a polymerization initiator, a polymerization inhibitor, and a surfactant.

The viscosity of the ink used in the present disclosure has no particular limit because it can be adjusted depending on the purpose of use and devices used. For example, if an ink ejecting device that ejects the ink from nozzles is employed, the viscosity thereof is preferably in the range of 3 mPa-s to 40 mPa·s, more preferably 5 mPa-s to 15 mPa·s, and particularly preferably 6 mPa·s to 12 mPa·s in the temperature range of 20 degrees C to 65 degrees C, preferably at 25 degrees C. In addition, it is particularly preferable to satisfy this viscosity range by the ink free of the organic solvent described above. Incidentally, the viscosity can be measured by a cone plate rotary viscometer (VISCOMETER TVE-22L, manufactured by TOKI SANGYO CO., LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

The static surface tension of the ink may be appropriately adjusted depending on the purpose of use and devices used, and is preferably 20 mN/m or higher but 55 mN/m or lower at 25 degrees C.

The method for curing the ink when curing the ink is not particularly limited and may be appropriately selected depending on the intended purpose. For example, the method can be performed in an energy applying step, the same as curing the foamable layer.

When energy is thermal energy, a colorant layer can be cured by application of thermal energy.

The temperature when applying thermal energy for heating is not particularly limited and may be appropriately selected depending on the intended purpose so long as a colorant layer can be thermally set.

When the energy is active energy rays, a colorant layer can be cured by irradiation with active energy rays.

The curing conditions are not particularly limited and may be appropriately selected depending on the intended purpose. For ultraviolet rays, it is preferable to use an irradiator that can irradiate a target with ultraviolet rays at an intensity of 6 W/cm or higher from an irradiation distance of 2 mm.

For electron beams, it is preferable to use an accelerating voltage that gives a dose of 15 kGy or higher at the farthest position from the electron beam irradiator used for curing.

### <Foaming step and foaming unit>

The foaming step is a step of applying energy to the foamable layer to form bosses and recesses, and is preferably a step of heating the foamable layer to foam (volume-expand) the foamable layer.

The foaming unit is a unit configured to apply energy to the foamable layer to form bosses and recesses, and is preferably a unit configured to heat the foamable layer to foam (volume-expand) the foamable layer.

The foaming unit is not particularly limited and any method such as thermal energy may be appropriately selected depending on the intended purpose so long as the foaming agent in the foamable layer can be foamed. Examples of the foaming unit employing heating include an infrared heater, a hot air heater, and a heating roller.

The heating temperature in the heating step is not particularly limited and may be appropriately selected depending on the intended purpose so long as the heating temperature is higher than or equal to the thermal decomposition temperature of the foaming agent, and is preferably 100 degrees C or higher but 200 degrees C or lower.

The timing at which the foaming step is performed is not particularly limited and may be appropriately selected depending on the intended purpose so long as the foaming step is performed at the same time as or after the foamable layer forming step is performed. More specifically, for example, as described above, it is possible to collectively perform the foaming step when applying thermal energy to cure the foamable layer forming liquid in the foamable layer forming step, or it is possible to perform the foaming step after curing the foamable layer forming liquid. Moreover, in the present disclosure, it is possible to perform the foaming step after the ink receiving layer forming step and before the image forming step, or it is possible to perform the foaming step after formation of the various layers (e.g., a foamable layer and an ink receiving layer) and formation of an image are completed (i.e., after the image forming step).

In the present disclosure, it is preferable to perform the foaming step after the image forming step (FIG. 4). Hence, in the present disclosure, the ink receiving layer forming step and the image forming step are performed over a foamable layer in an unfoamed state (i.e., a flat foamable layer having no bosses and recesses), making it possible to land the ink stably over the ink receiving layer when forming an image by discharging the ink with, for example, an inkjet head, and better improve image color developability of the image formed. Description will be made with reference to, for example, FIG. 4. First, the defoaming agent is applied by patterning (the upper section of FIG. 4). An ink is applied by inkjet printing in a manner that the ink application amount on a portion corresponding to an inclined portion is greater than the ink application amount on a portion corresponding to a flat portion as described below (the middle section of FIG. 4). Subsequently, the foaming step of foaming the foamable layer is performed (the lower section of FIG. 4).

The method for forming a foamed region and an unfoamed region when foaming a foamable layer is not limited to application of a defoaming agent described below, but may be appropriately selected depending on the intended purpose. A foamed region and an unfoamed region may be formed in the foamable layer by, for example, selective heating of the region to be foamed in the foamable layer. In this case, for example, a laser irradiation unit may be used as the foaming unit.

### <Print data generating step>

The print data generating step is a step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data. For better understanding, the print data generating step will be described as if the step were separated into a data acquiring step, a processing data generating step, and a print data generating step based on the processing data. However, these steps are a series of steps and are not clearly segmented from each other. One embodiment of the printed matter producing method of the present disclosure includes a data acquiring step of acquiring shape data representing a shape of a bossed-recessed region of the foamable layer after foamed and image data representing an image to be formed over the bossed-recessed region, a processing data generating step of generating processing data for processing data in the image data corresponding to an inclined portion of the bossed-recessed region using the shape data, and a print data generating step of processing the image data using the processing data to generate print data. In the image forming step, the ink is discharged based on the print data.

### <Data acquiring step and data acquiring unit>

The data acquiring step is a step of acquiring shape data representing a shape of a bossed-recessed region of the foamable layer after foamed and image data representing an image to be formed over the bossed-recessed region.

The data acquiring unit is a unit configured to acquire shape data representing a shape of a bossed-recessed region of the foamable layer after foamed and image data representing an image to be formed over the bossed-recessed region.

The shape data is data representing the shape of the surface of a bossed-recessed region of the foamable layer after foamed. Specifically, shape data represents, for example, positions of bosses and recesses, bossing/recessing sharpness, the maximum bossing/recessing height, and gradation level.

The bossing/recessing sharpness is determined by the distribution of permeation of the defoaming agent into the foamable layer, and the gradation level is determined by permeation depth. When changing the permeation depth of the defoaming agent, it is possible to change the application amount of the defoaming agent per unit area, or it is possible to prepare a plurality of defoaming agents varied in concentration or kind and discharge these defoaming agents from different nozzles. For example, FIG. 3 illustrates an example of a cross-section of a shape of the foamable layer foamed after the defoaming agent is applied in stripe shapes in varied application amounts per area or at varied concentrations based on a boss/recess pattern needed to be formed in a printed matter to be produced (i.e., a boss/recess pattern of a printed matter to be produced), where the shape is measured by shape profile measurement with a laser microscope. The upper section of FIG. 3 expresses the boss/recess pattern of a printed matter to be produced by a shading pattern, where the boss/recess pattern expresses a defoaming agent application pattern, i.e., the application amount per area at the same time, by varied denseness levels. In the case of the embodiment illustrated in FIG. 3, edge-edge sharpness of the foamable layer was constant at roughly 45 degrees irrespective of the height, as represented by the surface shape of the bossed-recessed region of the foamable layer after foamed illustrated in the second section of FIG. 3. That is, the inclination angles between the edge a and the edge b, between the edge c and the edge d, between the edge e and the edge f, and the edge g and the edge h were constant at about 45 degrees. Here, the edge refers to a point that couples an inclined portion to a flat portion in the bossed-recessed region. Edge detection is not particularly limited, and a known technique may be appropriately selected and used depending on the intended purpose. For example, a differential filter may be used. The maximum bossing/recessing height is the height difference (400 micrometers) between the edges f and g, which are the deepest positions in the bossed-recessed region, and the edges a and h, which are the highest positions in the bossed-recessed region.

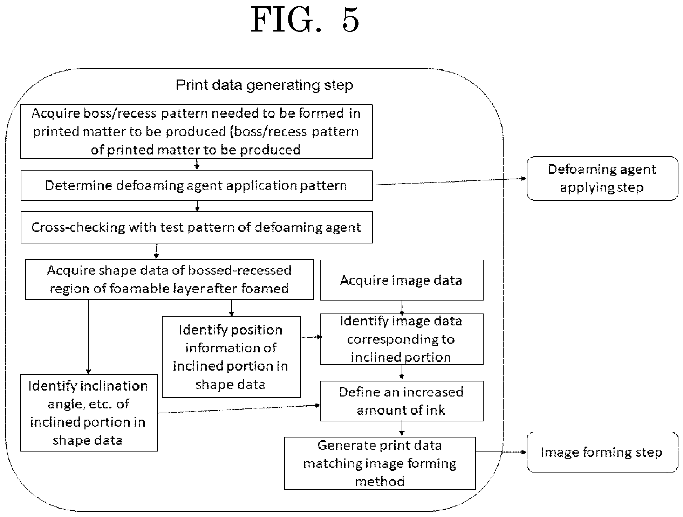

Examples of the method for acquiring the shape data include a method of directly acquiring shape data from the shape of the foamable layer after foamed, and a method of acquiring shape data from a bossed-recessed shape predicted based on a defoaming agent application pattern. The method of directly acquiring shape data from the shape of the foamable layer after foamed can acquire shape data by measuring the foamable layer after foamed by a known method such as shape profile measurement with a laser microscope. The prediction method based on the defoaming agent application pattern can acquire shape data of the bossed-recessed region of the foamable layer after foamed, by previously applying the defoaming agent to the foamable layer as a test pattern, measuring the foamable layer after foaming the test pattern by, for example, shape profile measurement with a laser microscope, acquiring data such as positions of bosses and recesses, bossing/recessing sharpness, the maximum bossing/recessing height, and gradation level as data samples, and cross-checking the actual defoaming agent application pattern with the test pattern of the defoaming agent. Cross-checking with the test pattern of the defoaming agent is not particularly limited, and a known technique such as a computer may be appropriately selected and used. The flowchart of FIG. 5 represents an example of the print data generating step in the case of acquiring shape data based on prediction of the shape of the bossed-recessed region of the foamable layer after foamed based on the defoaming agent application pattern. The defoaming agent application pattern used in the defoaming agent applying step is also used in the print data generating step, and cross-checked with the test pattern of the defoaming agent, to obtain the shape data of the bossed-recessed region of the foamable layer after foamed based on the data samples of the test pattern.

On the other hand, the image data is image data representing an image to be formed over the bossed-recessed region. The image data is data for formation of an image over a plane surface. Specifically, the image data is data indicating color information of a pixel and gradation number of a pixel for each pixel position.

### <Processing data generating step and processing data generating unit>

Processing data is data for increasing the amount of the ink to be discharged to an inclined portion depending on the stretched area of the inclined portion having a stretched surface along with formation of bosses and recesses and consequent change of the surface area of the foamable layer.

The processing data generating step is a step of generating processing data for processing data in the image data corresponding to an inclined portion of the bossed-recessed region using the shape data.

The processing data generating unit is a unit configured to generate processing data for processing data in the image data corresponding to an inclined portion of the bossed-recessed region using the shape data.

The processing data generating step is a step of generating processing data for generating print data assigning a greater amount of an ink to a portion in the image data corresponding to an inclined portion of the bossed-recessed region based on the shape data. As illustrated in FIG. 5, position information of an inclined portion is identified based on the shape data of the bossed-recessed region of the foamable layer after foamed, acquired in the data acquiring step, image data corresponding to the inclined portion is identified, and an amount of an ink increased to match surface area increase due to foaming is defined in the image data identified. As a result, for example, position information and density information of each pixel falling on the inclined portion are identified. Identification of the position information of an inclined portion of the bossed-recessed region based on the shape data may be performed by detection of edges in the shape data, or by cross-checking with the test pattern of the defoaming agent with the defoaming agent application pattern. Cross-checking with the test pattern of the defoaming agent is not particularly limited and a known technique such as a computer may be appropriately selected and used depending on the intended purpose. Identification of the image data corresponding to the inclined portion may be performed based on, for example, position information of an inclined portion in the shape data acquired.

The amount of the ink increased is determined based on the bossing/recessing sharpness in the shape data acquired in the data acquiring step, i.e., based on the inclination angle of the inclined portion. The amount of the ink increased is preferably an amount increased proportionately to the surface area increase due to foaming, and the amount may be increased uniformly or may be increased differently depending on the shape of the inclined portion. In the case of the example illustrated in FIG. 3 in which the inclination angles of the inclined portions are roughly constant, the amount of the ink is increased uniformly. Therefore, it is preferable to set the amount of the ink to an amount that is √2 times greater, proportionately to the surface area increase due to 45-degree inclination. Moreover, it is preferable to set the increased amount uniformly for the respective colors involved.

The shape data can be expressed as a shading pattern as illustrated in the upper section of FIG. 3. It is possible to acquire a bossing/recessing height from shading level difference in the shading pattern of the shape data, and acquire bossing/recessing sharpness as the shading level difference together with the information of edges detected from the bossed-recessed shape. It is also possible to acquire a processing range by detecting edges from the bossed/recessed shape and reflecting the edges in the shading pattern. Processing data based on the shading level difference and the processing range can also be expressed as a shading pattern as processing data, such as addition data illustrated on the third section of FIG. 3. The image data is processed based on the processing data, to generate print data.

### <Print data generating step based on processing data and print data generating unit based on processing data>

The print data generating step based on processing data is a step of processing the image data using the processing data to generate print data. For example, print data matching an image forming method is generated based on position information and density information of each pixel falling on an inclined portion identified in the form of the processing data.

The print data generating unit based on processing data is a unit configured to process the image data using the processing data to generate print data.

For example, in the case of a single-pass (single-scan) inkjet method, the print data generating step may generate print data including an adjusted amount of a liquid droplet to be discharged from an inkjet head, adjusted based on the processing data.

Specifically, for example, it is possible to change discharging waveforms to be applied. For example, this changing process is intended for preparing a +α waveform for each of a small droplet discharging waveform, a medium droplet discharging waveform, and a large droplet discharging waveform for ink-jetting during image formation, using four gradations for image formation over a plane surface whereas adding three gradations to use a total of seven gradations on bosses and recesses, and determining whether to use the +α waveform based on the processing data.

In the case of a multi-pass inkjet method, the print data generating step may generate print data instructing once applying an ink all over the surface in the same liquid droplet amount as used over a plane surface and instructing separately applying a greater amount to an inclined portion based on the processing data.

Through processing the image data using the processing data, data for discharging the ink in a greater amount to an inclined portion can be obtained.

### <Transparent layer forming step and transparent layer forming unit>

The transparent layer forming step is a step of forming a transparent layer containing a polymer of a polymerizable compound c over at least one of the ink receiving layer and the image.

The transparent layer forming unit is a unit configured to form a transparent layer containing a polymer of a polymerizable compound c over at least one of the ink receiving layer and the image.

In the present disclosure, with the transparent layer forming step, it is possible to better improve durability of the bossed-recessed shape and the image that are formed, and maintain the design property and the image quality attributable to the excellent bossed-recessed shape.

The transparent layer forming unit is not particularly limited and may be appropriately selected depending on the intended purpose. Examples of the transparent layer forming unit include a combination of a known material applying unit (e.g., a coating unit and a discharging unit) with a known energy applying unit (e.g., a thermal energy applying unit and an active energy ray irradiation unit), like the foamable layer forming unit.

In the present disclosure, a transparent layer refers to a layer that has a haze [scattered light/total transmitted light × 100 (%)] of 8% or lower when measured in an optical characteristic test using HAZE-GARD I (a haze meter, available from BYK-Gardner GmbH).

In the present disclosure, the transparent layer forming step is performed after the ink receiving layer forming step or after the image forming step. In this way, a transparent layer can be formed over at least one of an ink receiving layer and an image. That is, in the present disclosure, a transparent layer may be formed between an ink receiving layer and an image, or may be formed over an image receiving layer and an image. When forming an image (solid image) over the entire surface of an ink receiving layer, a transparent layer may be formed only over the image.

In the present disclosure, it is preferable to form a transparent layer over at least an image in the transparent layer forming step. In other words, in the present disclosure, it is preferable to perform the transparent layer forming step after the image forming step to form a transparent layer over an image. In the present disclosure, this makes it possible to particularly improve durability of the bossed-recessed shape and the image that are formed, and maintain the design property and the image quality attributable to the excellent bossed-recessed shape.

In the transparent layer forming step, a transparent layer can be formed in a manner that, for example, the material applying unit applies a transparent layer forming liquid (clear ink) containing a polymerizable compound c to form a film and the energy applying unit subsequently cures the film. In other words, in the transparent layer forming step, for example, a film containing a polymerizable compound c is formed and cured, to form a transparent layer containing a polymer of the polymerizable compound c.

The transparent layer forming liquid (clear ink) contains a polymerizable compound c, preferably contains a polymerization initiator, and further contains other components as needed.

### -Polymerizable compound c-

The same polymerizable solvent (polymerizable compound) as described above as a component of the foamable layer forming liquid of the foamable layer can be used as the polymerizable compound c. Two or more kinds of polymerizable compounds may be contained. In terms of a quick drying property of the polymerizable compound c, the content of the polymerizable compound c is preferably 50% by mass or greater but 99% by mass or less and more preferably 80% by mass or greater but 95% by mass or less relative to the total amount of the transparent layer forming liquid. In the present disclosure, the polymerizable compound a, the polymerizable compound b, and the polymerizable compound c may be the same polymerizable compound or may be different polymerizable compounds.

### -Polymerization initiator-

The same polymerization initiator as used in the foamable layer forming liquid of the foamable layer described above can be used as the polymerization initiator. The content of the polymerization initiator is preferably 1% by mass or greater but 20% by mass or less and more preferably 5% by mass or greater but 15% by mass or less relative to the total amount of the transparent layer forming liquid in order to obtain a sufficient curing speed.

### -Other components-

The other components of the transparent layer forming liquid are not particularly limited and may be appropriately selected depending on the intended purpose. The same components as used as the other components in the foamable layer forming liquid can be selected.

For example, the ink that is used in the image forming step but is free of a colorant can be used as the transparent layer forming liquid (clear ink). "Free of a colorant" means that no colorant is substantially contained. The content of a colorant is preferably less than 0.1% by mass.

From the viewpoint of maintaining the design property and the image quality attributable to the excellent bossed-recessed shape by forming a transparent layer, a preferable transparent layer forming liquid (clear ink) is an ink that is used in the image forming step, but is free of a colorant, and has a higher content ratio of a multifunctional monomer/oligomer as the polymerizable compound b.

The static surface tension of the transparent layer forming liquid (clear ink) may be appropriately adjusted depending on the purposes of use or devices used, and is preferably 20 mN/m or higher but 55 mN/m or lower at 25 degrees C.

The viscosity of the transparent layer forming liquid (clear ink) may be appropriately adjusted depending on the purposes of use or devices used, and is preferably 1 mPa·s or higher but 100 mPa·s or lower at 25 degrees C. When applying the transparent layer forming liquid (clear ink) by an inkjet method, the viscosity of the transparent layer forming liquid is preferably 5 mPa-s or higher but 20 mPa-s or lower.

The method for applying the transparent layer forming liquid (clear ink) over at least one of an ink receiving layer and an image is not particularly limited and may be appropriately selected depending on the intended purpose. An inkjet method is preferable because an inkjet method can apply the transparent layer forming liquid (clear link) without having contact with the ink receiving layer or the image.

The amount of the transparent layer forming liquid (clear ink) to be applied is not particularly limited, may be appropriately selected depending on the intended purpose, and is preferably 3 microliters/cm² or less over the surface of the ink receiving layer.

The discharging speed at which the transparent layer forming liquid (clear ink) is discharged is not particularly limited, may be appropriately selected depending on the intended purpose, and is preferably 5 m/s or higher, and more preferably 5 m/s or higher but 15 m/s or lower. This makes it possible to more stably discharge the transparent layer forming liquid (clear ink).

### <Base material surface reforming step and base material surface reforming unit>

The base material surface reforming step is a step of applying a corona discharge treatment to the base material over which a foamable layer is to be formed, to reform the surface of the base material.

The base material surface reforming unit is a unit configured to apply a corona discharge treatment to the base material over which a foamable layer is to be formed, to reform the surface of the base material.

The base material surface reforming unit is not particularly limited and may be appropriately selected depending on the intended purpose so long as a corona discharge treatment can be applied to the base material. A known corona discharge treatment apparatus may be used. For example, TEC-4AX (available from Kasuga Denki, Inc.) may be used as the corona discharge treatment apparatus.

In the present disclosure, the base material surface reforming step is performed before the foamable layer forming step. That is, in the present disclosure, it is preferable to perform before the foamable layer forming step, the base material surface reforming step of applying a corona discharge treatment to the base material over which a foamable layer is to be formed, to reform the surface of the base material. In the present disclosure, this makes it possible to improve wettability and adhesiveness of the foamable layer forming liquid with respect to the base material, and improve an adhesive force between the foamable layer after cured and foamed with the base material, making it possible to better improve durability of an image against, for example, external shocks.

In the base material surface reforming step, for example, the surface of the base material can be reformed through a corona discharge treatment performed using TEC-4AX (available from Kasuga Denki, Inc.) mentioned above, at a gap of 1 mm between an electrode and the surface of the base material, at a rate of 2 m/minute, and at 100 W.

### <Foamable layer surface reforming step and foamable layer surface reforming unit>

The foamable layer surface reforming step is a step of applying a corona discharge treatment to a foamable layer to reform the surface of the foamable layer.

The foamable layer surface reforming unit is a unit configured to apply a corona discharge treatment to a foamable layer to reform the surface of the foamable layer.

The foamable layer surface reforming unit is not particularly limited and may be appropriately selected depending on the intended purpose so long as a corona discharge treatment can be applied to a foamable layer. A known corona discharge treatment apparatus may be used, like the base material surface reforming unit. For example, TEC-4AX (available from Kasuga Denki, Inc.) may be used as the corona discharge treatment apparatus, like the base material surface reforming unit.

In the present disclosure, the foamable layer surface reforming step is performed after the foamable layer forming step. That is, in the present disclosure, it is preferable to perform after the foamable layer forming step, the foamable layer surface reforming step of applying a corona discharge treatment to the foamable layer to reform the surface of the foamable layer. In the present disclosure, this makes it possible to improve wettability and adhesiveness of the ink receiving layer forming liquid with respect to the foamable layer, and improve an adhesive force between the ink receiving layer after curing and foaming and the foamable layer, making it possible to better improve durability of an image against, for example, external shocks.

In the foamable layer surface reforming step, for example, the surface of the foamable layer can be reformed through a corona discharge treatment performed using TEC-4AX (available from Kasuga Denki, Inc.) mentioned above, at a gap of 1 mm between an electrode and the surface of the foamable layer, at a rate of 2 m/minute, and at 100 W.

### <Other steps and other units>

The other steps are not particularly limited and may be appropriately selected depending on the intended purpose. Examples of the other steps include a protective layer forming step of forming a protective layer different from a transparent layer, an embossing step, a bending step, a cutting step, and a controlling step.

The other units are not particularly limited and may be appropriately selected depending on the intended purpose. Examples of the other units include a protective layer forming unit configured to form a protective layer different from a transparent layer, an embossing unit, a bending unit, a cutting unit, and a controlling unit.

### <<Embossing step and embossing unit>>

The embossing step is a step of forming a bossed-recessed pattern over a printed matter.

The embossing unit is a unit configured to form a bossed-recessed pattern over a printed matter.

In the embossing step, methods for, for example, embossing, chemical embossing, rotary screening, or flexographic printing typically used for imparting bosses and recesses to, for example, wallpaper and decorative laminates may be appropriately selected and used.

Examples of the embossing unit include a unit configured to emboss a printed matter with a cooling roller after heating, and a unit configured to emboss a printed matter simultaneously with heating using heat roller embossing.

The embossing depth of embossing is preferably 0.08 mm or greater but 0.50 mm or less. When the embossing depth is 0.08 mm or greater, a three-dimensional appearance can be expressed. When the embossing depth is 0.50 mm or less, the abrasion resistance of the surface can be improved.

Examples of the shapes of the bossed-recessed pattern formed by embossing include wood texture grooves, bosses and recesses over slate surface, cloth surface texture, satin, grey, hairline, and hatching pattern grooves.

### <Printed matter>

A printed matter of the present disclosure includes a base material, a cell-containing layer positioned over the base material and containing cells, an ink receiving layer positioned over the cell-containing layer and containing a polymer A, and an image positioned over the ink receiving layer and formed of a cured product of an ink containing a colorant and a polymer B. The amount of the ink per area of the base material is greater over an inclined portion of the cell-containing layer than over a flat portion of the cell-containing layer with respect to an image of each gradation level within the image. The printed matter preferably includes a transparent layer and further includes other layers as needed.

The printed matter of the present disclosure can be suitably produced by the printed matter producing method and a printing apparatus of the present disclosure. A preferred embodiment of the printed matter of the present disclosure may be the same as the preferred embodiment of the printed matter of the printed matter producing method of the present disclosure.

### <<Cell-containing layer>>

The cell-containing layer is not particularly limited, may be appropriately selected depending on the intended purpose so long as the cell-containing layer is a layer containing cells, and is preferably a layer containing a foamed foaming agent. The cell-containing layer is preferably a layer containing a porous portion.

That is, the cell-containing layer of the printed matter of the present disclosure can be suitably formed through the foamable layer forming step and the foaming step of the printed matter producing method of the present disclosure. Therefore, a preferred embodiment of the cell-containing layer of the printed matter of the present disclosure may be the same as the preferred embodiment of the foamable layer of the printed matter producing method of the present disclosure.

### <<Ink receiving layer>>

The ink receiving layer is positioned over a cell-containing layer and contains a polymer A.

The ink receiving layer of the printed matter of the present disclosure can be suitably formed through the ink receiving layer forming step of the printed matter producing method of the present disclosure. Therefore, a preferred embodiment of the ink receiving layer of the printed matter of the present disclosure may be the same as the preferred embodiment of the ink receiving layer of the printed matter producing method of the present disclosure.

The polymer A contained in the ink receiving layer of the printed matter of the present disclosure is not particularly limited and may be appropriately selected depending on the intended purpose so long as the polymer A is a polymer, and may be a polymer of the polymerizable compound a described above.

### <<Image>>

The image of the printed matter of the present disclosure is positioned over the ink receiving layer and formed of a cured product of an ink containing a colorant and a polymer B.

The image of the printed matter of the present disclosure can be suitably formed through the image forming step of the printed matter producing method of the present disclosure. Therefore, a preferred embodiment of the image of the printed matter of the present disclosure may be the same as the preferred embodiment of the image of the printed matter producing method of the present disclosure.

For example, the same ink as used in the image forming step described above may be used as the ink contained in the image of the printed matter of the present disclosure. The polymer B contained in the ink that forms the image of the printed matter of the present disclosure is not particularly limited and may be appropriately selected depending on the intended purpose so long as the polymer B is a polymer, and may be, for example, a polymer of the polymerizable compound b described above.

### <<Thickness of ink>>

The ink of the printed matter of the present disclosure is formed to have approximately the same thickness over a flat portion and an inclined portion of the cell-containing layer.

The thickness of the ink of the printed matter of the present disclosure can be suitably determined through the data acquiring step, the processing data generating step, and the print data generating step of the printed matter producing method of the present disclosure.

That is, the image of the printed matter of the present disclosure is formed based on print data assigning a greater amount of the ink to a portion of the image data corresponding to an inclined portion based on shape data representing a shape of a bossed-recessed region of the cell-containing layer. In other words, in terms of the amount of the ink per area of the base material, the image of the printed matter of the present disclosure is corrected to contain the ink in a greater amount over an inclined portion of the cell-containing layer than over a flat portion of the cell-containing layer with respect to an image of each gradation level.

### <<Transparent layer>>

The printed matter of the present disclosure preferably includes a transparent layer positioned over at least one of the ink receiving layer and the image.

The transparent layer of the printed matter of the present disclosure can be suitably formed through the transparent layer forming step of the printed matter producing method of the present disclosure. Therefore, a preferred embodiment of the transparent layer of the printed matter of the present disclosure may be the same as the preferred embodiment of the transparent layer of the printed mater producing method of the present disclosure.

### <<Other layers>>

The printed matter of the present disclosure includes a base material, and may contain the cell-containing layer over the base material. The same base material as described in the printed matter producing method of the present disclosure may be used as the base material.

The other layers of the printed matter of the present disclosure are not particularly limited and may be appropriately selected depending on the intended purpose.

A printing apparatus of the present disclosure used in the printed matter producing method of the present disclosure will be described in detail with reference to the drawings.

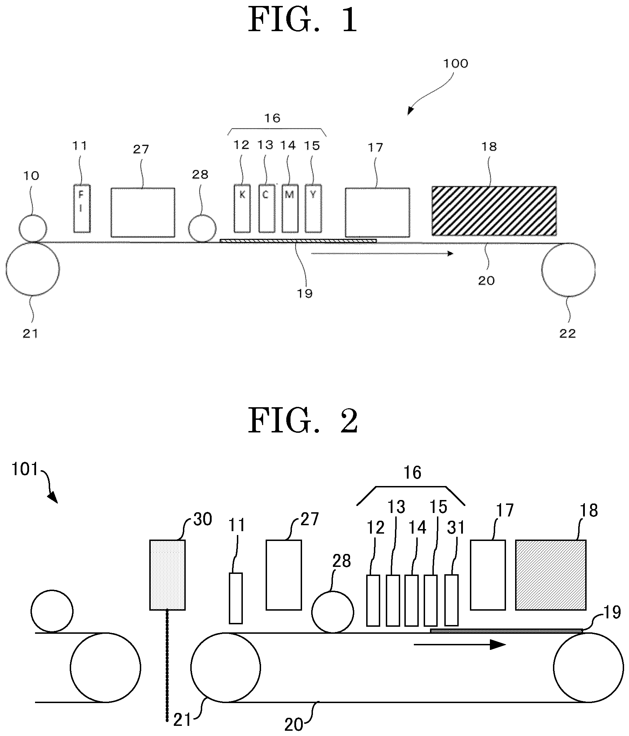

FIG. 1 is a schematic view illustrating an example of the printing apparatus of the present disclosure. The printing apparatus 100 of FIG. 1 includes a coating roller 10 configured to apply the foamable layer forming liquid over a base material 19, and at the downstream side of the coating roller 10, a defoaming agent head 11, a discharging head 16 including: a black head 12; a cyan head 13; a magenta head 14; and a yellow head 15, active energy ray irradiators 17 and 27, a heater 18, and a coating roller 28 configured to apply the ink receiving layer forming liquid over the base material 19 to which the foamable layer forming liquid is applied. In FIG. 1, the reference numeral 20 denotes a conveyor belt, the reference numeral 21 denotes a sending roller counter to the coating roller 10, and the reference numeral 22 denotes a winding roller.

The base material 19 is conveyed in the direction of the arrow in FIG. 1 with the conveyor belt 20 wound up by the winding roller 22.

First, the coating roller 10 applies the foamable layer forming liquid over the surface of the base material 19, and the active energy ray irradiator 27 irradiates the base material 19 over which the foamable layer forming liquid is applied with active energy rays under a predetermined irradiation condition, to cure the foamable layer forming liquid and form a foamable layer. That is, in this example, the coating roller 10 and the active energy ray irradiator 27 are an example of the foamable layer forming unit.

Next, with the base material 19 scanned at a predetermined speed, the defoaming agent head 11 discharges a defoaming agent to a predetermined region of the foamable layer to bring the defoaming agent into contact with the foamable layer. That is, in this example, the defoaming agent head 11 is an example of the defoaming agent applying unit. As described above, the predetermined region, to which the defoaming agent is applied, of the foamable layer can be identified based on, for example, data representing bosses and recesses of a printed matter to be produced (i.e., a boss/recess pattern of a printed matter to be produced).

Next, the coating roller 28 applies the ink receiving layer forming liquid over the foamable layer.

Next, the respective color heads including the black head 12, the cyan head 13, the magenta head 14, and the yellow head 15 discharge black, cyan, magenta, and yellow inks by an inkjet method. Here, the ink heads are controlled to discharge the inks based on print data generated by a print data generating unit (not shown in FIG. 1). The print data generating unit, for example, is a computer processing unit configured to acquire image data and shape data representing a shape of a bossed-recessed region of the foamable layer after foamed, and generate print data assigning a greater amount of an ink to a portion in the image data corresponding to an inclined portion of the bossed-recessed region based on the shape data. Subsequently, the active energy ray irradiator 17 irradiates the base material 19 over which the inks are applied with active energy rays under a predetermined irradiation condition to cure the ink receiving layer forming liquid and the inks, to form an ink receiving layer and an image. That is, in this example, the coating roller 28 and the active energy ray irradiator 17 are an example of the ink receiving layer forming unit, and the discharging head 16 and the active energy ray irradiator 17 are an example of the image forming unit.

Next, the heater 18 heats the formed foamable layer, to foam the foamable layer. That is, in this example, the heater 18 is an example of the foaming unit.

In this way, the printed matter produced by the printing apparatus 100 can be provided with an excellent design property based on a bossed-recessed shape and an excellent image quality.

As the printing apparatus 100, FIG. 1 illustrates a single-pass type having an inkjet head-printable width that is greater than the width of the base material to which is printing is performed, and configured to perform scanning once. Instead, the printing apparatus of the present disclosure may be a multi-pass type having a head width smaller than the width of the base material and provided with a driving mechanism (head unit or base material conveying) that enables scanning more than once.

FIG. 2 is a schematic view illustrating another example of the printing apparatus of the present disclosure.

The printing apparatus 101 illustrated in FIG. 2 is different from the printing apparatus 100 in that a curtain coater 30 is provided to apply the foamable layer forming liquid over a base material 19, and a transparent layer forming liquid (clear ink) head 31 is provided to apply the transparent layer forming liquid (clear ink) by an inkjet method. Therefore, in the printing apparatus 101, the curtain coater 30 and the active energy ray irradiator 27 are an example of the foamable layer forming unit.

In addition to the operation performed by the printing apparatus 100, the printing apparatus 101 causes the active energy ray irradiator 17 to irradiate the base material 19, over which the clear ink is applied by the transparent layer forming liquid (clear ink) head 31, with active energy rays under a predetermined irradiation condition, to cure the clear ink and form a transparent layer. That is, in this example, the transparent layer forming liquid (clear ink) head 31 and the active energy ray irradiator 17 are an example of the transparent layer forming unit.

Hence, the printing apparatus 101 can form a transparent layer over a printed matter. Therefore, the printing apparatus 101 can better improve durability of the bossed-recessed shape and the image that are formed, and can produce a printed matter that can maintain an excellent design property based on a bossed-recessed shape and an excellent image quality for a long term.

### EXAMPLES

The present disclosure will be described below by way of Examples. The present disclosure should not be construed as being limited to these Examples.

### (Example 1)

### <Preparation of foamable layer forming liquid A1>

KUREHA MICROSPHERE (obtained from Kureha Corporation, H750) (15 parts by mass) serving as a foaming agent, isobornyl acrylate (obtained from Tomoe Engineering Co., Ltd.) (40 parts by mass) serving as a polymerizable solvent (polymerizable compound), 2-acryloyloxyethyl phthalate (obtained from Shin-Nakamura Chemical Co., Ltd.) (40 parts by mass), and OMNIRAD TPO (obtained from IGM Resins B.V.) (5 parts by mass) serving as a polymerization initiator were stirred, to prepare a foamable layer forming liquid A1.

The static surface tension of the foamable layer forming liquid A1 at 25 degrees C measured with a surface tensiometer DCAT (obtained from EKO Instruments Co., Ltd.) according to a plate method using a platinum plate was 33 mN/m. The viscosity of the foamable layer forming liquid A1 at 25 degrees C measured with a rheometer MCR302 (obtained from Anton-Paar GmbH) and CP50-1 (a cone plate of 50 mm, 1°) at 25 degrees C was 130 mPa·s.

### <Preparation of ink receiving layer forming liquid A2>

2-Acryloyloxyethyl succinate (obtained from Shin-Nakamura Chemical Co., Ltd.) (94 parts by mass) serving as a polymerizable compound a, OMNIRAD TPO (obtained from IGM Resins B.V.) (5 parts by mass) serving as a polymerization initiator, and BYK-UV-3510 (obtained from BYK-Gardner GmbH) (1 part by mass) serving as a surfactant were stirred, to prepare an ink receiving layer forming liquid A2.

The static surface tension and the viscosity of the ink receiving layer forming liquid A2 at 25 degrees C measured by the same measuring methods as used for the foamable layer forming liquid A1 were 20 mN/m and 190 mPa·s.

### <Preparation of black ink A-Bk>

Phenoxyethyl acrylate (obtained from Tokyo Chemical Industry Co., Ltd.) (25 parts by mass) serving as a polymerizable compound b, acryloylmorpholine (obtained from Tokyo Chemical Industry Co., Ltd.) (26 parts by mass), trimethylolpropane ethoxytriacrylate (obtained from Daicel-Allnex Ltd.) (35 parts by mass), OMNIRAD TPO (obtained from IGM Resins B.V.) (5 parts by mass) serving as a polymerization initiator, SOLSPERSE 32000 (obtained from Lubrizol Corporation) (2 parts by mass) serving as a surfactant/dispersant, and SPECIAL BLACK 350 (a black pigment, obtained from BASF Japan Ltd.) (7 parts by mass) serving as a colorant were stirred, to prepare a black ink A-Bk.

The static surface tension and the viscosity of the black ink A-Bk at 25 degrees C measured by the same measuring methods as used for the foamable layer forming liquid A1 were 24 mN/m and 25 mPa·s.

### <Preparation of magenta ink A-M>

Phenoxyethyl acrylate (obtained from Tokyo Chemical Industry Co., Ltd.) (25 parts by mass) serving as a polymerizable compound b, acryloylmorpholine (obtained from Tokyo Chemical Industry Co., Ltd.) (26 parts by mass), trimethylolpropane ethoxytriacrylate (obtained from Daicel-Allnex Ltd.) (35 parts by mass), OMNIRAD TPO (obtained from IGM Resins B.V.) (5 parts by mass) serving as a polymerization initiator, SOLSPERSE 32000 (obtained from Lubrizol Corporation) (2 parts by mass) serving as a surfactant/dispersant, and CINQUASIA MAGENTA RT-355-D (a magenta pigment, obtained from BASF Japan Ltd.) (7 parts by mass) serving as a colorant were stirred, to prepare a magenta ink A-M.

The static surface tension and the viscosity of the magenta ink A-M at 25 degrees C measured by the same measuring methods as used for the foamable layer forming liquid A1 were 24 mN/m and 25 mPa·s.

### <Preparation of cyan ink A-C>

Phenoxyethyl acrylate (obtained from Tokyo Chemical Industry Co., Ltd.) (25 parts by mass) serving as a polymerizable compound b, acryloylmorpholine (obtained from Tokyo Chemical Industry Co., Ltd.) (26 parts by mass), trimethylolpropane ethoxytriacrylate (obtained from Daicel-Allnex Ltd.) (35 parts by mass), OMNIRAD TPO (obtained from IGM Resins B.V.) (5 parts by mass) serving as a polymerization initiator, SOLSPERSE 32000 (obtained from Lubrizol Corporation) (2 parts by mass) serving as a surfactant/dispersant, and IRGALITE BLUE GLVO (a cyan pigment, obtained from BASF Japan Ltd.) (40 parts by mass) serving as a colorant were stirred, to prepare a cyan ink A-C.

The static surface tension and the viscosity of the cyan ink A-C at 25 degrees C measured by the same measuring methods as used for the foamable layer forming liquid A1 were 24 mN/m and 25 mPa·s.

### <Preparation of yellow ink A-Y>

Phenoxyethyl acrylate (obtained from Tokyo Chemical Industry Co., Ltd.) (25 parts by mass) serving as a polymerizable compound b, acryloylmorpholine (obtained Tokyo Chemical Industry Co., Ltd.) (26 parts by mass), trimethylolpropane ethoxytriacrylate (obtained from Daicel-Allnex Ltd.) (35 parts by mass), OMNIRAD TPO (obtained from IGM Resins B.V.) (5 parts by mass) serving as a polymerization initiator, SOLSPERSE 32000 (obtained from Lubrizol Corporation) (2 parts by mass) serving as a surfactant/dispersant, and NOVOPERM YELLOW H2G (a yellow pigment, obtained from Clariant AG) (40 parts by mass) serving as a colorant were stirred, to prepare a yellow ink A-Y.

The static surface tension and the viscosity of the yellow ink A-Y at 25 degrees C measured by the same measuring methods as used for the foamable layer forming liquid A1 were 24 mN/m and 25 mPa·s.

Next, a printed matter 1 was obtained in the manner described below, using the printing apparatus 101 illustrated in FIG. 2, and the foamable layer forming liquid A1, the ink receiving layer forming liquid A2, a black ink A-Bk, a magenta ink A-M, a cyan ink A-C, and a yellow ink A-Y prepared.

A curtain coater 30 (obtained from Cefla, a laboratory flow coater) applied the foamable layer forming liquid A1 with an average thickness of 100 micrometers over a base material 19 formed of a MDF having a thickness of 9 mm (a medium density fiberboard, N.P. wood obtained from Sumitomo Forestry Co., Ltd.). Subsequently, the head 11 discharged a defoaming agent I prepared in the manner described below in a liquid droplet amount of 30 pL at a liquid droplet speed of 7 m/s, to impart a stripe-shaped defoaming pattern to the foamable layer at dot densities of 75 dpi in the head width direction and 600 dpi in the conveying direction.

### <<Preparation of defoaming agent I>>

1,6-Hexanediol diacrylate (obtained from Tomoe Engineering Co., Ltd.) (95 parts by mass) serving as a multifunctional monomer, and OMNIRAD TPO (obtained from IGM Resins B.V.) (5 parts by mass) serving as a polymerization initiator were stirred, to prepare a defoaming agent I.

The static surface tension and the viscosity of the defoaming agent I at 25 degrees C measured by the same measuring methods as used for the foamable layer forming liquid A1 were 24 mN/m and 20 mPa·s.

After application of the defoaming agent I, the active energy ray irradiator 27 (obtained from Hamamatsu Photonics K.K., a linear irradiation-type UV-LED light source GJ-75) irradiated and cured the foamable layer forming liquid A1 and the defoaming agent I with UV from a position apart by 10 mm from the surface of the base material, to form a foamable layer.

In order to acquire shape data of the bossed-recessed region of the foamable layer, the defoaming agent I was applied over a foamable layer under the same conditions and in the same pattern, cured in the same manner, and foamed by heating under below-described conditions, which are the same as the conditions to be used for the printed matter. A thusly formed boss/recess pattern of the foamable layer after foamed was acquired by shape profile measurement with a laser microscope, as a data sample. In the stripe-shaped defoaming pattern, inclined portions of the bossed-recessed region of the foamable layer were inclined constantly at about 45 degrees irrespective of the height. Shape data representing the shape of the bossed-recessed region of the foamable layer was acquired based on the stripe-shaped defoaming pattern formed by the defoaming agent applied to the printed matter and the data sample.

Next, the roller coater 28 (obtained from Matsuo Sangyo Co., Ltd., EASY PROOF) applied the ink receiving layer forming liquid A2 with an average thickness of 6 micrometers over the foamable layer.

Next, with the base material scanned at a speed of 15 m/min, a GEN5 head (MH5420, 150 npi × four lines) obtained from Ricoh Industry Co., Ltd. and serving as the ink discharging head 16 heated the black ink head 12, the cyan ink head 13, the magenta ink head 14, and the yellow ink head 15 to 40 degrees C, to discharge the black ink A-Bk, the magenta ink A-M, the cyan ink A-C, and the yellow ink A-Y each in a liquid droplet amount of 7 pL and at a liquid droplet speed of 7 m/s, to enable formation of a solid image at 600 dpi × 600 dpi at a dot density of 25% for each color. Here, print data for the solid image was generated by processing of the image data based on the shape data acquired, in a manner that the amount of the ink for image data corresponding to an inclined portion would be greater than the amount of the ink for image data corresponding to a flat portion. That is, the amount of the ink for a portion corresponding to a flat portion was 7 pL for each color in terms of a liquid droplet amount, whereas the amount of the ink for a portion corresponding to an inclined portion was increased by √2 times, to 9.9 pL in terms of liquid droplet amount. The image was formed using the print data in which the ink application amount was adjusted in the manner described above. The amount of the ink attached per area was 3.9 mg/mm² over a flat portion, whereas the amount of the ink attached per area was 5.5 mg/mm² over an inclined portion. In the following description, the black ink A-Bk, the magenta ink A-M, the cyan in A-C, and the yellow ink A-Y may be referred to collectively as "color inks".

Next, the active energy ray irradiator 17 (obtained from Hamamatsu Photonics K.K., a linear irradiation-type UV-LED light source GJ-75) irradiated and cured the ink receiving layer forming liquid A2 and the inks (A-Bk, A-M, A-C, and A-Y) with UV from a position apart by 10 mm from the surface of the base material, to form an ink receiving layer and an image. The period of time from discharging of the yellow ink until curing was 6 seconds.

Next, the heater 18 performed foaming by heating. As the heater, a heater produced by combining VORTEX BLOWER G SERIES obtained from Hitachi Industrial Equipment Systems Co., Ltd., a high hot air-generating electric heater XS-2 obtained from K.K. Kansai Dennetsu, and a high-blow nozzle 50AL obtained from K.K. Kansai Dennetsu and adjusting a wind speed from the nozzle tip to 30 m/sec and a nozzle tip temperature to 200 degrees C was used. In this way, a printed matter 1 was obtained.

### (Comparative Example 1)

A printed matter was obtained in the same manner as in Example 1, except that unlike in Example 1, printing was applied over a portion corresponding to an inclined portion in a liquid droplet amount of 7 pL without the processing of the image data based on the shape data acquired in a manner that the amount of the ink for image data corresponding to an inclined portion would be greater than the amount of the ink for image data corresponding to a flat portion.

### <Evaluation>

Next, the obtained printed matters of Example 1 and Comparative Example 1 were evaluated in terms of image quality (color developability) and a design property in the manners described below. The evaluation results are presented in Table 1.

### <<Evaluation of image quality>>

Color developing uniformity of the solid image formed with the color inks was visually observed and evaluated according to the criteria described below. The ratings B and A are non-problematic levels for practical use.

### [Evaluation criteria of color developability]

A: Streaky unevenness due to bosses and recesses were not observed in the in-plane direction of the solid image.
B: Streaky unevenness due to bosses and recesses were observed in the in-plane direction of the solid image, but were not conspicuous.
C: Streaky unevenness due to bosses and recesses were conspicuous in the in-plane direction of the solid image.

### <<Evaluation of design property>>

A design property of the printed matters produced was judged according to the criteria described below. The ratings B and A are non-problematic levels for practical use.

### [Evaluation criteria of design property]

A: Steps in the stripe-shaped bossed-recessed shape were recognizable only by visual observation.
B: Steps in the stripe-shaped bossed-recessed shape were not recognizable by visual observation, but was recognizable by touch.
C: Steps in the stripe-shaped bossed-recessed shape were not recognizable even by touch.

**Table 1**

| | Color developability | Design property |
|---|---|---|
| Comparative Example 1 | C | A |
| Example 1 | A | A |

From the results presented in Table 1, it was revealed that the printed matter of Example 1 had an excellent image quality and an excellent design property.

As described above, the printed matter producing method of the present disclosure includes a foamable layer forming step of forming a foamable layer containing a foaming agent, a defoaming agent applying step of applying a defoaming agent to a predetermined region of the foamable layer to bring the defoaming agent into contact with the foamable layer, an ink receiving layer forming step of forming an ink receiving layer over the foamable layer to which the defoaming agent is applied, a print data generating step of acquiring image data and shape data representing a shape of a bossed-recessed region of the foamable layer after foamed, and generating print data assigning a greater amount of an ink to a portion in the image data corresponding to an inclined portion of the bossed-recessed region based on the shape data, an image forming step of applying an ink over the ink receiving layer based on the print data to form an image, and a foaming step of applying energy to the foamable layer to form bosses and recesses.

Hence, the printed matter producing method of the present disclosure can produce a printed matter having an excellent design property based on a bossed-recessed shape and an excellent image quality.

Aspects of the present disclosure are, for example, as follows.
<1> A printed matter producing method including:
   forming a foamable layer containing a foaming agent;
   applying a defoaming agent to a predetermined region of the foamable layer to bring the defoaming agent into contact with the foamable layer;
   forming an ink receiving layer over the foamable layer to which the defoaming agent is applied;
   acquiring image data and shape data representing a shape of a bossed-recessed region of the foamable layer after foamed, and generating print data assigning a greater amount of an ink to a portion in the image data corresponding to an inclined portion of the bossed-recessed region based on the shape data;
   applying an ink over the ink receiving layer based on the print data to form an image; and
   applying energy to the foamable layer to form bosses and recesses.
<2> The printed matter producing method according to <1>,
   wherein the defoaming agent contains a multifunctional monomer.
<3> The printed matter producing method according to <1> or <2>,
   wherein the ink receiving layer contains a polymer of a polymerizable compound a, and
   wherein the ink contains a colorant and a polymerizable compound b.
<4> The printed matter producing method according to any one of <1> to <3>,
   wherein in the applying energy, the foamable layer is heated to form the bosses and the recesses.
<5> The printed matter producing method according to any one of <1> to <4>,
   wherein in the forming a foamable layer, a foamable layer forming liquid containing the foaming agent is applied over a base material and subsequently cured, to form the foamable layer.
<6> The printed matter producing method according to any one of <3> to <5>,
   wherein in the forming an ink receiving layer, an ink receiving layer forming liquid containing the polymerizable compound a is applied over the foamable layer and subsequently cured, to form the ink receiving layer.
<7> The printed matter producing method according to <6>,
   wherein in the applying an ink, the ink is applied over the ink receiving layer and subsequently cured, to form the image.
<8> The printed matter producing method according to <7>,
   wherein curing of the ink receiving layer forming liquid in the forming an ink receiving layer and curing of the ink in the applying an ink are performed collectively.
<9> The printed matter producing method according to any one of <1> to <8>,
   wherein in the applying an ink, the ink is applied over the ink receiving layer by an inkjet method.
<10> The printed matter producing method according to any one of <1> to <9>,
   wherein the applying energy is performed after the applying an ink.
<11> The printed matter producing method according to any one of <4> to <10>,
   wherein the foaming agent is a thermally expansible microcapsule.
<12> The printed matter producing method according to any one of <1> to <11>, further including
   forming a transparent layer containing a polymer of a polymerizable compound c over at least one of the ink receiving layer and the image.
<13> The printed matter producing method according to <12>,
   wherein in the forming a transparent layer, the transparent layer is formed over at least the image.
<14> The printed matter producing method according to any one of <1> to <13>,
   wherein in the applying a defoaming agent, the defoaming agent is applied by an inkjet method.
<15> The printed matter producing method according to any one of <1> to <14>, further including before the forming a foamable layer,
   applying a corona discharge treatment to a base material over which the foamable layer is to be formed, to reform a surface of the base material.
<16> The printed matter producing method according to any one of <1> to <15>, further including after the forming a foamable layer,
   applying a corona discharge treatment to the foamable layer to reform a surface of the foamable layer.
<17> A printing apparatus including:
   a foamable layer forming unit configured to form a foamable layer containing a foaming agent;
   a defoaming agent applying unit configured to apply a defoaming agent to a predetermined region of the foamable layer to bring the defoaming agent into contact with the foamable layer;
   an ink receiving layer forming unit configured to form an ink receiving layer over the foamable layer to which the defoaming agent is applied;
   a print data generating unit configured to acquire image data and shape data representing a shape of a bossed-recessed region of the foamable layer after foamed, and generate print data assigning a greater amount of an ink to a portion in the image data corresponding to an inclined portion of the bossed-recessed region based on the shape data;
   an image forming unit configured to apply an ink over the ink receiving layer based on the print data to form an image; and
   a foaming unit configured to apply energy to the foamable layer to form bosses and recesses.
<18> The printing apparatus according to <17>,
   wherein the image forming unit is based on an inkjet method.
<19> A printed matter including:
   a base material;
   a cell-containing layer positioned over the base material and containing cells;
   an ink receiving layer positioned over the cell-containing layer and containing a polymer A; and
   an image positioned over the ink receiving layer and formed of a cured product of an ink containing a colorant and a polymer B,
   wherein an amount of the ink per area of the base material is greater over an inclined portion of the cell-containing layer than over a flat portion of the cell-containing layer with respect to an image of each gradation level within the image.

The printed matter producing method according to any one of <1> to <16>, the printing apparatus according to <17> or <18>, and the printed matter according to <19> can solve the various problems in the related art and achieve the object of the present disclosure.

## Claims

1. A printed matter producing method comprising:
forming a foamable layer containing a foaming agent;
applying a defoaming agent to a predetermined region of the foamable layer to bring the defoaming agent into contact with the foamable layer;
forming an ink receiving layer over the foamable layer to which the defoaming agent is applied;
acquiring image data and shape data representing a shape of a bossed-recessed region of the foamable layer after foamed, and generating print data assigning a greater amount of an ink to a portion in the image data corresponding to an inclined portion of the bossed-recessed region based on the shape data;
applying an ink over the ink receiving layer based on the print data to form an image; and
applying energy to the foamable layer to form bosses and recesses.

2. The printed matter producing method according to claim 1,
wherein the defoaming agent contains a multifunctional monomer.

3. The printed matter producing method according to claim 1 or 2,
wherein the ink receiving layer contains a polymer of a polymerizable compound a, and
wherein the ink contains a colorant and a polymerizable compound b.

4. The printed matter producing method according to any one of claims 1 to 3,
wherein in the applying energy, the foamable layer is heated to form the bosses and the recesses.

5. The printed matter producing method according to any one of claims 1 to 4,
wherein in the forming a foamable layer, a foamable layer forming liquid containing the foaming agent is applied over a base material and subsequently cured, to form the foamable layer.

6. The printed matter producing method according to any one of claims 3 to 5,
wherein in the forming an ink receiving layer, an ink receiving layer forming liquid containing the polymerizable compound a is applied over the foamable layer and subsequently cured, to form the ink receiving layer.

7. The printed matter producing method according to claim 6,
wherein in the applying an ink, the ink is applied over the ink receiving layer and subsequently cured, to form the image.

8. The printed matter producing method according to claim 7,
wherein curing of the ink receiving layer forming liquid in the forming an ink receiving layer and curing of the ink in the applying an ink are performed collectively.

9. The printed matter producing method according to any one of claims 1 to 8,
wherein in the applying an ink, the ink is applied over the ink receiving layer by an inkjet method.

10. The printed matter producing method according to any one of claims 1 to 9,
wherein the applying energy is performed after the applying an ink.

11. The printed matter producing method according to any one of claims 4 to 10,
wherein the foaming agent is a thermally expansible microcapsule.

12. The printed matter producing method according to any one of claims 1 to 11, further comprising
forming a transparent layer containing a polymer of a polymerizable compound c over at least one of the ink receiving layer and the image.

13. The printed matter producing method according to any one of claims 1 to 12,
wherein in the applying a defoaming agent, the defoaming agent is applied by an inkjet method.

14. A printing apparatus comprising:
a foamable layer forming unit configured to form a foamable layer containing a foaming agent;
a defoaming agent applying unit configured to apply a defoaming agent to a predetermined region of the foamable layer to bring the defoaming agent into contact with the foamable layer;
an ink receiving layer forming unit configured to form an ink receiving layer over the foamable layer to which the defoaming agent is applied;
a print data generating unit configured to acquire image data and shape data representing a shape of a bossed-recessed region of the foamable layer after foamed, and generate print data assigning a greater amount of an ink to a portion in the image data corresponding to an inclined portion of the bossed-recessed region based on the shape data;
an image forming unit configured to apply an ink over the ink receiving layer based on the print data to form an image; and
a foaming unit configured to apply energy to the foamable layer to form bosses and recesses.

15. A printed matter comprising:
a base material;
a cell-containing layer positioned over the base material and containing cells;
an ink receiving layer positioned over the cell-containing layer and containing a polymer A; and
an image positioned over the ink receiving layer and formed of a cured product of an ink containing a colorant and a polymer B,
wherein an amount of the ink per area of the base material is greater over an inclined portion of the cell-containing layer than over a flat portion of the cell-containing layer with respect to an image of each gradation level within the image.
